(19) **Europäisches Patentamt / European Patent Office / Office européen des brevets**

(11) **EP 2 472 753 B1**

(12) **EUROPEAN PATENT SPECIFICATION**

(45) Date of publication and mention of the grant of the patent:
**12.06.2013 Bulletin 2013/24**

(51) Int Cl.:
***H04J 3/06*** (2006.01)

(21) Application number: **11150135.9**

(22) Date of filing: **04.01.2011**

(54) **Method of delay measurement in an optical network**

Verfahren zum Messen von Verzögerungen in optischen Netzwerken

Procédé de mesure de délai dans un réseau optique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.07.2012 Bulletin 2012/27**

(73) Proprietor: **Alcatel Lucent**
**75007 Paris (FR)**

(72) Inventors:
• **Ronchetti, Luigi**
  **2210, Como (IT)**

• **Iachelini, Alessandro**
  **22036, Erba (Como) (IT)**
• **Gemelli, Riccardo**
  **20019, Settimo M.se (Milano) (IT)**

(74) Representative: **Mildner, Volker et al**
**Alcatel-Lucent Deutschland AG**
**Intellectual Property & Standards**
**Lorenzstrasse 10**
**70435 Stuttgart (DE)**

(56) References cited:
**EP-A2- 0 616 444     WO-A1-96/13915**

## Description

## Field of the invention

The invention relates to a method of delay measurement in an optical network.

## Background

In optical networks, network nodes are connected by one or more transmission lines for data transmission. One example of a transmission line is an optical fiber used for optical data transmission.

Furthermore, it is common that two network nodes of an optical network are connected by two transmission lines: a first transmission line for data transmission in a first direction from a first network node to a remote network node, and a second transmission line for data transmission between the nodes in the opposite direction. From the point of view of the first network node, the first transmission line is called downlink while the second transmission line is called uplink.

In synchronous networks, network nodes carry out data transmission applying a particular multiplexing technique which requires the network nodes to be synchronous to each other. Each network node contains an internal clock, and the internal clocks of the nodes have to be synchronous to each other. In other words, the internal clocks have to be aligned to the same time of day.

Furthermore, methods for synchronizing the internal clocks of two network nodes are known. Such methods are based on an exchange of signals between the two network nodes along the uplink in one direction and the downlink in the other direction. Furthermore, such methods are based on the assumption, that the transmission delays of the uplink and the downlink transmission lines, affecting the transmitted signals, are equal.

For measuring the delays of the fibers called uplink and downs, a known method is the so-called round-trip delay measurement: A signal is transmitted by the first node into the first fiber in a first transmission direction, received by the second node from the first fiber, transmitted by the second node into the second fiber in the second transmission direction, and received by the first node from the second fiber. The first node determines the time interval , which the signal takes for this round trip, as the total delay of the two fibers, and determines a delay of one of the two fibers as half of this time interval.

The document EP 0616444A2 discloses a coarse ranging method in a telecommunication system, wherein the ranging method is performed at a fixed position within an upstream multi frame reserved for ranging. By applying a low power pseudo noise sequence for coarse ranging and sampling the range at the side of the main station only within the defined ranging window and thus using only part of the pseudo noise sequence, the position of which is known to the main station, a more accurate ranging is achieved.

The document W096-13915 discloses a ranging process for port to multiport communication systems having a central station and several terminals connected to the central station by a network, in particular a passive optical network. Each terminal sends a pseudo noise sequence on a carrier outside of the data transmission band and the pseudo noise sequence is received with a delay by the central station. The central station correlates the pseudo noise sequence with the received sequences using a linear feedback shift register.

## Summary

The inventors have observed, that there may be a difference between the transmission delays of the transmission lines. This difference may be taken into account for properly synchronizing the internal clocks using the known method of synchronization.

It is an aim of the invention, to provide a method for determining a difference between transmission delays.

The proposed method advantageously comprises different steps.

A first signal is transmitted into a first optical transmission line, having a first transmission delay, in a transmission direction.

A second signal is transmitted into a second optical transmission line, having a second transmission delay, in the same transmission direction.

At least a part of the first signal is received from the first optical transmission line.

At least a part of the second signal is received from said the optical transmission line.

A difference between the first transmission delay and the second transmission delay is determined, using the received parts of the signals.

The proposed solution is provided by the method of claim 1 and the devices of the claims 2 and 3 .

The proposed method could have one or more different advantages.

The method allows for a determination of the difference between the transmission delays, using two optical transmission lines such as an uplink and a downlink. Instead of transmitting the two signals into two different optical transmission lines in opposite directions, the uplink optical transmission line and the downlink optical transmission line are used for signal transmission in the same direction.

The proposed method of determining the difference between the transmission delays does not rely on any assumptions, such as e.g. a measured fiber length, but measures the difference of the transmission delays by transmitting signals over the actually involved transmission lines. Therefore, the proposed method achieves a higher accuracy for measuring a transmission delay difference than methods relying on certain assumptions. The proposed method takes into account actual and real effects affecting the transmission delays of the transmission lines. Such effects may for example be a dispersion effect or a temperature effect.

**Brief Description of the Figures**

Figure 1 shows two devices for measuring a delay difference of transmission lines according to a first embodiment.

Figure 2 shows a shift register and a cycle of states of the shift register.

Figures 3a and 3b show different embodiments of the shift register.

Figure 4 shows two devices for measuring a delay difference according to an alternative solution of the first embodiment.

Figures 5 and 6 show the devices shown in Figure 4 together with optical switching units interconnecting the devices with transmission lines.

Figures 7a, 7b and 7c show different embodiments of the optical switching units.

Figures 8a and 8b show a transmission unit and a reception unit.

Figure 9 shows the two devices according to a further alternative solution of the first embodiment.

Figure 10 shows steps of a protocol carried out at the two devices of the further alternative solution.

Figure 11 shows the two devices for measuring a delay difference according to a second embodiment.

Figure 12 shows different steps of a method carried out at the two devices shown in Figure 11.

Figure 13 shows different steps of an alternative method carried out at the two devices shown in Figure 11.

Figure 14 shows the two devices for measuring a delay difference according to a third embodiment.

Figure 15 shows different steps of a method carried out at the two devices shown in Figure 14.

Figure 16 shows the two devices according to an alternative solution of the third embodiment.

Figure 17 shows the two devices for measuring a delay difference according to a fourth embodiment.

Figure 18 shows an alternative solution of one of the devices according to the fourth embodiment.

**Description of embodiments**

As previously stated, network nodes of a synchronous network apply a multiplexing technique, which requires the internal clocks of the network nodes to be synchronous to each other. One example of such a multiplexing technique of a synchronous network is the Synchronous Digital Hierarchy (SDH) as described in the document "ITU-T G.797/Y.1322 (01/2007), Network node interface for the synchronous digital hierarchy (SDH)".

A method for synchronizing the internal clocks of two network nodes, which assumes that the transmission delays of the two transmission lines are equal, is described in the document "IEEE Std 1588-2008 (24 July 2008), IEEE Standard for a Precision Clock Synchronization Protocol for Networked Measurement and Control Systems", herein briefly called IEEE 1588. For properly applying this method, the difference between the transmission delays of the transmission lines, determined by the proposed method, may be taken into consideration.

Thus, a method and devices for determining a difference between the transmission delays of two transmission lines is proposed and described in detail in the following embodiments.

The method covers at least five implementations, described in the following by the first five embodiments. The following has to be considered:

1. In all of the five embodiments, the delay difference is determined, using a received part of a first signal and a received part of a second signal.

The transmitted signals may be given in different forms. They may be given by a physical, time continuous signal. Furthermore, these signals may be given in the form of values of a random value sequence. A special case of a random value sequence is a pseudo random value sequence.

A random value sequence is a sequence of values, that is provided by an apparatus, which generates random numbers.

For true random value sequences, the apparatus generates the random value sequence from a physical process . The apparatus may be based on microscopic phenomena that generate a low-level, statistically random "noise" signal, such as thermal noise. The random number generator typically consists of a transducer to convert some aspect of the physical phenomenon to an electrical signal, an amplifier and other electronic circuitry to bring the output of the transducer into the macroscopic realm, and some type of analogue to digital converter to convert the output into a digital number, often a simple binary digit 0 or 1. By repeatedly sampling the randomly varying signal, a series of true random numbers is obtained.

A pseudo random value sequence may be generated by a pseudorandom number generator, which is based on is a deterministic algorithm for generating a sequence of numbers that approximates the properties of random numbers. The sequence is not truly random in that it is completely determined by a relatively small set of initial values. An example of a pseudorandom number generator is an output sequence of a linear feedback shift register.

In at least the solutions described in the first, the second, the third and the fourth embodiment, the signals may be values of a random value sequence.

In at least the solutions described in the first, the second, the third and the fourth embodiment, the signals may be values of a pseudo random value sequence.

In at least the solutions of the second embodiment, the second solution of the third embodiment and the solutions of the fourth embodiment, the signals may be values of a true random value sequence.

2. In all of the first five embodiments, a device receives from two different transmission lines two parts of signals, which can be used for determining a difference between the transmission delays.

3. In the fourth and the fifth embodiment, the device receiving from two different transmission lines the two parts of signals from which the delay difference can be determined is the first device.

4. In the first, the second and the third embodiment, the device receiving from two different transmission lines the two parts of signals from which the delay difference can be determined is the second device.

5. In the first embodiment, the receiving device uses a linear feedback shift register for determining the difference between the transmission delays. The same applies to the alternative solution of the second embodiment, in which a counter is provided in the form of a linear feedback shift register.

6. In the second embodiment, the receiving device synchronizes at least one a linear feedback shift register to a received part of a signal, for determining the difference between the transmission delays.

7. In the third embodiment, the receiving device uses at least one counter, for determining the difference between the transmission delays.

8. In the third embodiment, two signals are received simultaneously at same time instances.

9. The step of determining the difference of the transmission delays may be carried out at the first device, at the second device or another device, not explicitly shown in the Figures. This other devices only needs to be provided with the necessary physical or mathematical signal, quantities or values for the determination of the delay difference. These necessary physical or mathematical signal, quantities or values are described in detail in the different embodiments.

**First embodiment**

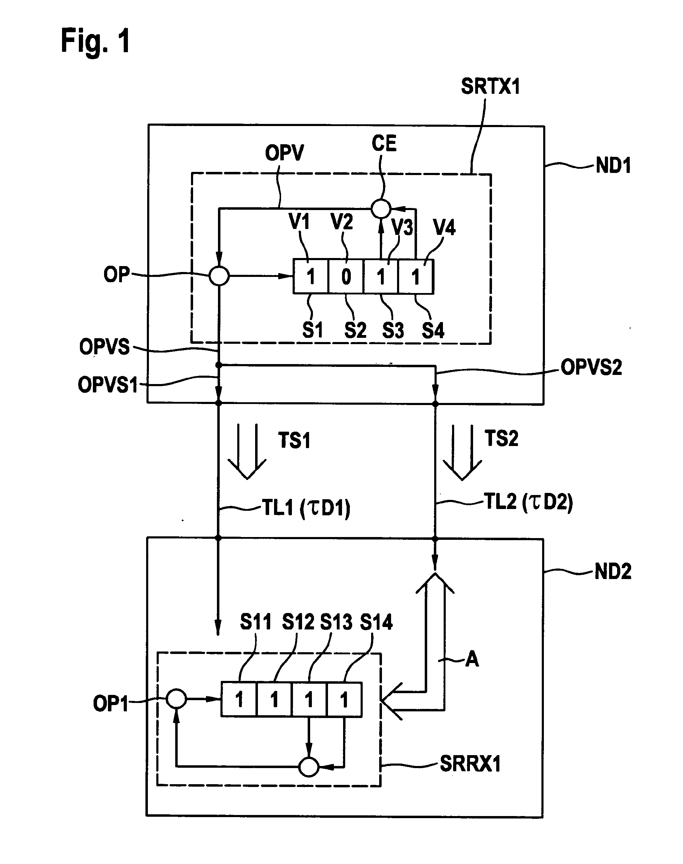

Figure 1 shows a device ND1, which is preferably a network node. The device ND1 contains a linear feedback shift register SRTX1, which generates a sequence of values OPV at its output OP, as it will be described in detail now on. The shift register SRTX1 contains a number of storage elements S1, S2, S3, S4, each of which stores a corresponding value V1, V2, V3, V4. The storage elements are arranged S1, S2, S3, S4 as a concatenated sequence of storage elements with ascending order. A number of storage elements S3, S4 are fed back to a combinatory element CE, which combines the values V3, V4 of the connected storage elements to an output value OPV at the output OP of the shift register SRTX1. The output value OPV is a linear combination of the values V3, V4 of the fed back storage elements S3, S4, making the shift register SRTX1 a linear feedback shift register. The storage elements S3, S4 that are fed back are also called feedback taps. The output OP is connected to the first storage element S1.

The shift register SRTX1 changes its state at clock-pulses of a clock rate. The clock-pulses are generated and provided by a clock-pulse generator not shown in Figure 1. The clock-pulses are generated at a constant clock-rate. At each clock-pulse, causing a change of state of the register SRTX1 from one time instance to a next time instance, a value V1, V2, V3 of a storage element S1, S2, S3 is shifted from the storage element S1, S2, S3 to the storage element S2, S3, S4 of next highest order. At the same clock pulse, the output value OPV is shifted into the first storage element S1, while the value V4 of the storage element S4 of the highest order is dropped. A sequence of consecutive output values OPV of consecutive states is equal to a sequence of values V4, V3, V2, V1 of the storage elements S4, S3, S2, S1 of descending order.

The shift register SRTX1 shown in Figure 1 has the length N=4, which is equal to the number of storage elements S1, S2, S3, S4. The length N=4 of the shift register SRTX1 is chosen only exemplarily, the length may be chosen to a greater or a smaller value.

The values stored in the storage elements S1, S2, S3, S4 of the shift register SRTX1 are binary values, either a '0' or a '1'. The combinatory element CE combines the values of the fed back storage elements S3, S4 via an XOR function.

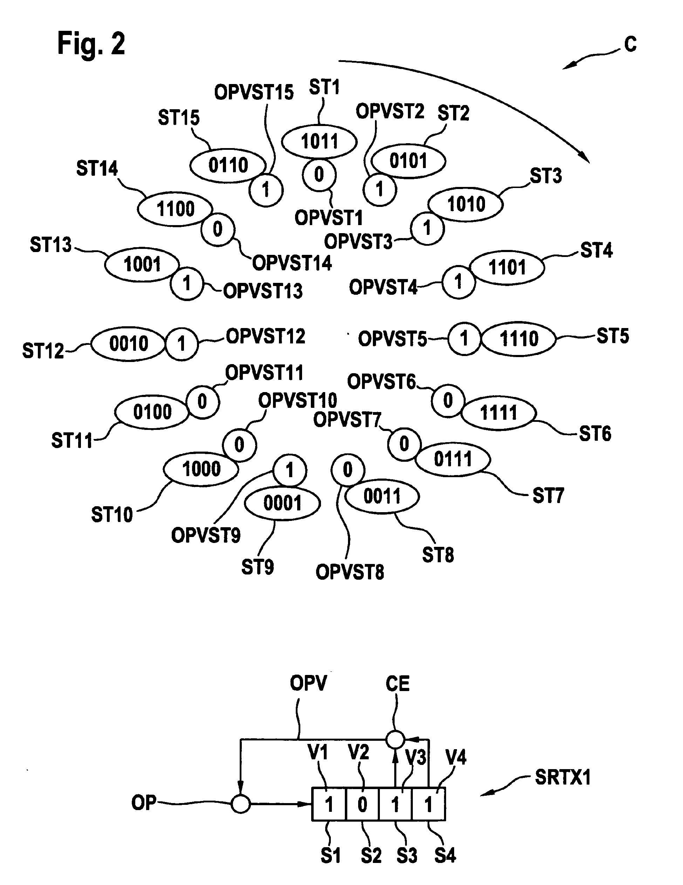

Figure 2 shows a schematic illustration of the shift register SRTX1 together with a cycle C of states ST1, ST2, ..., ST15, the register SRTX1 goes through at successive time instances. Furthermore, next to each state ST1, ST2, ..., ST15, the corresponding output value OPVST1, OPVST2, ..., OPVST15 generated by the shift register SRTX1 is shown. The output value OPVST1 of a state ST1 is equivalent to the value of the first storage element S1 at the next successive state ST2. Furthermore, the N consecutive values of one state, for example the consecutive values '0011' of the state ST8, are equal to the consecutive output values of the N consecutive preceding states, for example the consecutive output values OPVST7, OPVST6, OPVST5, OPVS4 as the consecutive values '0011' of the states ST7, ST6, ST5, ST4.

The state ST1 shows the set of values of the storage elements S1, S2, S3, S4 at one time instance. The values of the storage elements S1, S2, S3, S4 at later time instances are determined only by the values of the storage elements S1, S2, S3, S4 at previous time instances and the choice of the storage elements S3, S4 that are fed back to determine the output value OPV. In this example, the storage elements S3, S4 are fed back, which may be described by the characteristic polynomial $x^4 + x^3 + 1$, wherein the term $x^4$ represents the feed back of the value of the storage element S4, the term $x^3$ represents the feed back of the value of the storage element S3. The choice of this characteristic polynomial $x^4 + x^3 + 1$, or in other words the choice of the feed backs, leads for a linear feedback shift register with the length N=4 to a sequence of states with a maximum length of $2^N-1=15$. If the shift register SRTX1 is initialized with a state, in which not all values are equal to zero, and if a characteristic polynomial is chosen such that a maximum length sequence is generated, then the shift register SRTX1 will successively cycle through the shown $2^N-1=15$ different states ST1, ST2, ..., ST15. The shift register SRTX1 will then furthermore never reach a state in which all values of the storage elements S1, S2, S3, S4 are equal to zero, which would lead to a deadlock situation. After the state ST15 of the order $2^N-1=15$, the shift register STRX1 returns to the first state ST1 and repeats its output sequence of output values. For a given shift register of a length N, it is always possible to find a proper characteristic polynomial describing the fed back storage elements, such that a state sequence of maximum length of $2^N-1$ is generated by the shift register. In other words, the shift register SRTX1, having a length of N storage elements, is configured, such that it cycles through $2^N-1$ states. Thus, the shift register SRTX1 generates a sequence of output values of the maximum length $2^N-1$.

The advantage of choosing the characteristic polynomial, such that the linear feedback shift register of length N is a maximum length shift register generating a maximum length output sequence of the length $2^N-1$, is that a minimum number of necessary storage elements S1, ..., S4 is needed. It is also possible, to generate a sequence of the length $2^N-1$ for a given N with another shift register, which has a length that is greater than the value N. Such a shift register would not be a maximum length shift register.

The shift register SRTX1 as shown in the Figures 1 and 2 is a Fibonacci feedback shift register. A Fibonacci shift register is a linear feedback shift register, for which at a given state the values V2, V3, V4 of the storage elements S2, S3, S4, having an order greater than one, are determined only by the values V1, V2, V3 of the storage elements S1, S2, S3 with the next lowest order at the preceding state. Furthermore, for a Fibonacci shift register, the output value OPV is a linear combination of the values V3, V4 of the fed back storage elements S3, S4.

A given Fibonacci linear feedback shift register of length N having a characteristic polynomial $x^N + x^A + x^B + x^C + ... + 1$ can always be implemented as an alternative implantation called Galois linear feedback shift register having the characteristic polynomial $x^N + x^{N-C} + x^{N-B} + x^{N-A} + ... + 1$. This choice of the characteristic polynomials causes the Fibonacci shift register and the Galois shift register to generate the same output sequence.

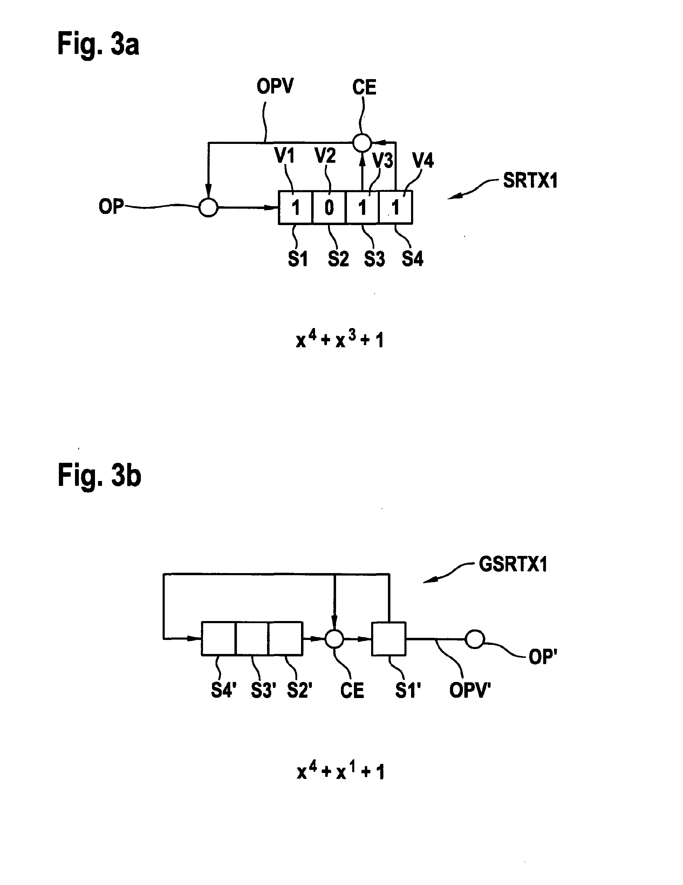

Figure 3a shows the Fibonacci linear feedback shift register SRTX1 having the characteristic polynomial $x^4 + x^3 + 1$, with N=4 and A=4. Figure 3b shows a corresponding Galois linear feedback shift register GSRTX1, for which the characteristic polynomial is $x^4 + x^1 + 1$. This Galois shift register GSRTX1 also contains N=4 storage elements S1', S2', S3', S4', but with the storage elements S1', S2', S3', S4' being arranged in reverse order compared to the storage elements S1, S2, S3, S4 of the Fibonacci shift register SRTX1.

The output value OPV' at the output OP' of the Galois shift register GSRTX1 is equal to the value V1' of the storage element S1' of the order 1. Furthermore, at a state change, the output value OPV' is written into the storage element S4' of the highest order N. Even furthermore, at a state change,

- the value V3', V2' of a storage element S3', S2' not characterised by the characteristic polynomial, is determined at a state change by the value V4', V3' of the storage element S4', S3' of next highest order before the state change, and
- the value V1' of a storage element S1' characterised by the characteristic polynomial, is determined at a state change by an XOR combination of the value V2' of the storage element S2' of next highest order and the output value OPV' before the state change. This XOR combination is carried out by a combinatory element CE.

Although the Galois shift register GSRTX1 generates at its output OP' a same sequence of output values OPV' as the sequence of output values OPV generated by the Fibonacci shift register SRTX1 at its output OP, there is a fundamental difference between the Fibonacci shift register SRTX1 and the Galois shift register GSRTX1. This difference is, that a sequence of output values OPV of the Fibonacci shift register SRTX1 is equal to the values V1, V2, V3, V4 of the storage elements S1, S2, S3, S4 at a later state. For the Galois shift register GSRTX1, the sequence of output values OPV' is not equal to the values V4', V3', V2', V1' of the storage elements S4', S3', S2', S1' at a later state. Thus, while for a Fibonacci shift register SRTX1 a state of the shift register may be determined by observing only a sequence of its output values OPV, this is not possible for a Galois shift register.

Coming back to Figure 1, a further device ND2, which is preferably a network node, is shown. The device ND2 contains a linear feedback shift register SRRX1. The shift register SRRX1 is configured, such that it generates the same output sequence at its output OP1 as the shift register SRTX1. In this example, the shift register SRRX1 has the same length N=4 as the shift register SRTX1 of the device ND1. Furthermore, the shift register SRRX1 is a Fibonacci shift registers described by the same characteristic polynomial $x^4 + x^3 + 1$ as a Fibonacci linear feedback shift register implementation of the shift register SRTX1. At the output OP1 of the shift register SRRX1, the output value OPVRX1 is present.

The shift register SRTX1 of the device ND1 is initialized with a state, in which the consecutive values V1, V2, V3, V4 of the storage elements S1, S2, S3, S4 are unequal to the value sequence '0000' for avoiding a deadlock state. Then, the shift register SRTX1 is operated at the clock rate of the clock-pulse generator of the device ND1, as previously described above. By doing so, a sequence OPVS of output values OPV is generated. This sequence OPVS is of the length $2^N - 1$, since the shift register SRTX1 is of the length N and since the feedback taps S3, S4 are chosen in this example such that the shift register SRTX1 is a maximum length linear feedback shift register. Thus, the sequence OPVS repeats itself after $2^N - 1$ values.

Consecutive values OPVS1 of the sequence OPVS are transmitted by the device ND1 into a transmission line TL1 to the device ND2, using a transmission signal TS1 carrying the consecutive values OPVS1. The transmission line TL1 introduces a transmission delay *TD*1, which causes a delay of the transmission signal TS1 and thus a delay of the transmitted consecutive values OPVS1.

At the device ND2, the transmission signal TS1 is received from the transmission line TL1. By receiving the transmission signal TS1, at least a subset of the consecutive values OPVS1 are received. The values of the subset are recovered from the transmission signal TS1, using a clock data recovery circuit not shown in Figure 1. The received subset has a length that is equal to or greater than the length N of the shift register SRRX1. The subset contains successive values of the consecutive values OPVS1.

For recovering a clock rate from the transmission signal TS1, the clock data recovery circuit may operate according to a clock recovery method as mentioned in the document "IEEE 802.3 (8 March 2002), Standard for Information technology, Telecommunications and information exchange between systems— Local and metropolitan area networks, Specific requirements, Part 3: Carrier sense multiple access with collision detection (CSMA/CD) access method and physical layer specifications", briefly called IEEE 802.3 herein.

The shift register SRRX1 is synchronized to the received subset of consecutive values OPVS1. This synchronization may be carried out in different alternative ways. The shift register SRRX1 contains N storage elements and generates a maximum length output sequence of a length $2^N - 1$. The value N is chosen in this example to the value N=4. The subset of consecutive values is at least of the length N.

A first alternative way for synchronizing the shift register SRRX1 is to receive a first value of the subset, and to write this first value into the first storage element S11, having the order 1. Then, the shift register SRRX1 changes its state at a clock rate that is provided by a clock-pulse generator not shown in Figure 1. At a change of state, the values stored in the first N-1 storage elements S11, S12, S13 are shifted to the next successive storage elements S12, S13, S14 of the order 2 to N . At the same state of change, a next successive value of the received subset is written into the first storage element S11 of the order 1. The steps of

- shifting values from the first N-1 storage elements S11, S12, S13 of the order 1 to N-1 to the next successive storage elements S12, S13, S14 of the order 2 to N, and
- writing a received next successive value of the received subset into the first storage element S11 of the order 1

at the provided clock rate are repeated for at least N states. In other words, the successive values of the received subset are written into the storage elements S11, S12, S13, S14 in a serial writing operation. Thus, at the Nth state the shift register SRRX1 contains in its N storage elements S11, S12, S13, S14 N successive values of the received subset of the transmitted consecutive values OPVS1. Then, the shift register SRRX1 is operated at the provided clock-rate, using the feedback taps S13, S14 for generating output values at the output OP1, which are written at the state changes into the first storage element S11. Therefore, after the Nth state, the shift register SRRX1 is synchronized to the received subset of the transmitted consecutive values OPVS1.

A second alternative way for synchronizing the shift register SRRX1 is to receive the subset of the consecutive values OPVS1 and then to write N successive values of the received subset in parallel into the N storage elements of the shift register SRRX1. In other words, the successive values of the received subset are written into the storage elements S11, S12, S13, S14 in a parallel writing operation. Then, the shift register SRRX1 is operated at the provided clock-rate, using the feedback taps S13, S14 for generating output values at the output OP1, which are written at the state changes into the first storage element S11. Therefore, the shift register SRRX1 is synchronized to the received subset of the transmitted consecutive values OPVS1.

According to both alternative ways of synchronizing the shift register SRRX1, a number of N successive values of the received subset are written into the storage elements S11, S12, S13, S14; then the shift register SRRX1 is operated at the provided clock-rate. In other words, by writing the N successive values of the received subset into the storage elements S11, S12, S13, S14, the shift register SRRX1 is initialized using the N successive values of the received subset. This way of initializing the shift register SRRX1 is possible, since the shift register SRRX1 is a Fibonacci shift register, for which the values V11, V12, V13, V14 of its storage elements S11, S12, S13, S14 are equal to a sequence of its output values OPVRX1. If the shift register SRRX1 was a Galois shift register, then an initialization of the shift register, by writing received N successive values into the storage elements, would not be feasible.

The provided clock rate of the clock-pulse generator of the device ND2 is either chosen as the same predetermined clock rate at which the clock-pulse generator of the device ND1 runs. Another solution is, to choose this clock rate as a clock rate that is recovered from the received transmission signal TS1 by a clock-data recovery circuit.

The delay of the transmission line TL1 causes a transmission delay $TD1$ to the transmitted subset values that were generated by the shift register SRTX1. By initializing the shift register SRRX1 with successive values of the received subset and then operating the shift register SRRX1, the state of the shift register SRRX1 is constantly delayed in comparison to the state of the shift register SRTX1 by this transmission delay $TD1$. In other words, at a certain time instance, the difference of the states of the shift register SRTX1 and of the shift register SRRX1 expresses this transmission delay $TD1$.

Further consecutive values OPVS2 of the sequence OPVS are transmitted by the device ND1 over another transmission line TL2 to the device ND2, using a transmission signal TS2 carrying the consecutive values OPVS2. The transmission line TL2 introduces a transmission delay $TD2$, which causes a delay of the transmission signal TS2 and thus a delay of the transmitted consecutive values OPVS2. The transmission delay $TD2$ may differ from the transmission delay $TD1$.

At the device ND2, a subset of the consecutive values OPVS2 are received via the transmission line TL2. The received subset has a length that is equal to or greater than the length N of the shift register SRRX1. The subset contains successive values of the consecutive values OPVS2.

A state of the shift register SRRX1 is determined. The state of the shift register SRRX1 may be determined in different alternative ways. A first way to determine the state of the shift register SRRX1 at a certain time instance is to read out the values of the storage elements S11, S12, S13, S14 at this certain time instance. A second way to determine the state of the shift register SRRX1 at a certain time instance is to sample the output values present at the output OP1 of the shift register SRRX1 during N time instances, which precede this certain time instance . This is possible, since the shift register SRRX1 is a linear feedback shift register.

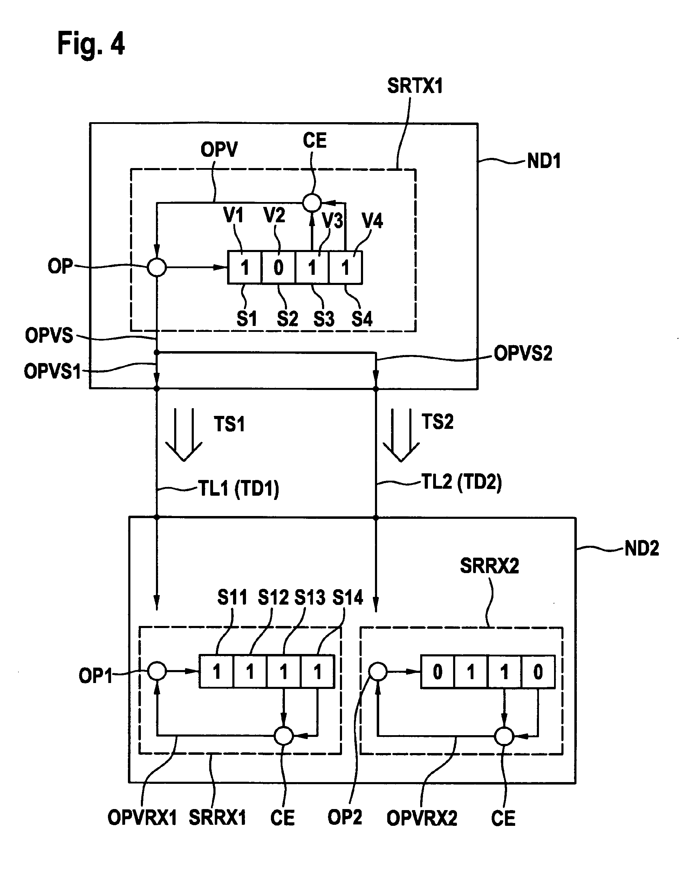

A difference between the transmission delay $TD1$ of the transmission line TL1 and the transmission delay $TD2$ of the transmission line TL2 is determined, using the determined state of the shift register SRRX1 and the received subset of the consecutive values OPVS2. In other words, the determined state of the shift register SRRX1 and the received subset of the consecutive values OPVS2 are compared to each other, as indicated by the arrow A in Figure 1. The step of determination can be carried out in different ways, as it will be described in detail further now on with respect to Figure 1 and with respect to Figure 4 later on.

A first way of determining the difference of the transmission delays using the determined state of the shift register and the received subset of the consecutive values OPVS2, is achieved, by using N successive values of the received subset of the consecutive values OPVS2, wherein the Nth successive value the one received at that time instance, at which the state of the shift register SRRX1 is determined. In the case, that the transmission lines TL1 and TL2 have equal transmission delays $TD1$ and $TD2$, then the N successive values of the received subset are equal to the N values defining the state of the shift register SRRX1. In the case, that the transmission line TL1 has a transmission delay successive values of the received subset greater than the transmission delay $TD2$ of the transmission line TL2, then the N successive values of the received subset define a state, in which the shift register will be in the future after a certain number of state changes. In the case, that the transmission line TL1 has a transmission delay successive values of the received subset smaller than the transmission delay $TD2$ of the transmission line TL2, then the N successive values of the received subset define a state, in which the shift register has been in the past a certain number of state changes ago.

Thus, by comparing the N successive values of the received subset with the N values of the determined state of the shift register SRRX1, one is able to define a number of states, by which the received N successive values differ from the determined state of the shift register SRRX1. In other words, the N successive values of the received subset are interpreted as a possible state of the shift register SRRX1.

The number of states, by which the received N successive values differ from the determined state of the shift register SRRX1, is equal to the difference of the transmission delays $TD1$ and $TD2$ of the transmission lines TL1, TL2.

By knowing the length of the shift registers SRTX1, SRRX1 and the characteristic polynomial $x^4 + x^3 + 1$ of the shift registers SRTX1, SRRX1, also the cycle C of states, shown in Figure 2, is known. Thus, the number of states NBRST, by which the received N successive values differ from the determined state of the shift register SRRX1 can be determined.

Using the known provided clock rate *CR* at which the shift registers SRRX1, SRRX2 are operated, the difference $\Delta TD$ of the transmission delays *TD*1, *TD*2 can be determined as

$$\Delta TD = NBRST \cdot CR .$$

It can not be known in advance, which of the transmission lines TL1, TL2 causes a greater transmission delay. Thus, when considering the cycle C of states shown in Figure 2, it can not be known, whether at one certain time instance the shift register SRRX1 is in a state that is ahead of the state defined by the N successive values, or whether the shift register SRRX1 is in a state that is behind of the state defined by the N successive values. For example, at one certain time instance, the shift register SRRX1 may be in the state ST15, while state defined by the N successive values is the state ST2. Two conclusions may be drawn: either the state defined by the N successive values is 12 states behind the shift register SRRX1, in which case the transmission line TL2 causes a greater delay than the transmission line TL1, or the state defined by the N successive values is three states ahead of the shift register SRRX1, in which case the transmission line TL1 causes a greater delay than the transmission line TL2. Therefore, the maximum delay difference, which can be measured, is equal to half the time interval, after which the cycle C repeats its states. This is also half the time interval, after which the sequences of output values of the shift registers SRTX1, SRRX1 of Figure 1 repeat themselves.

The transmission lines TL1 is preferably an optical fiber. The transmission of the consecutive values OPVS1 by means of the transmission signal TS1 is then preferably carried out, by modulating an optical signal of a single wavelength, using the consecutive values OPVS1 according to a Binary Phase Shift Keying (BPSK) modulation scheme, and then transmitting this optical signal as the transmission signal TS1. The transmission signal is generated, by modulating an optical signal using the consecutive values OPVS1. In other words, the transmission signal TS1 is generated in dependence on the consecutive values OPVS1. In the same way, the consecutive values OPVS2 may be transmitted by means of the transmission signal TS2.

Other modulation schemes may be used for modulating an optical signal consisting of a single wavelength. The transmission signals TS1, TS2 may be contained within optical Wavelength Division Multiplex (WDM) signals used for data transmission, that are transmitted along the transmission lines TL1, TL2. To give a concrete example of a measurement of a delay difference, the following parameters may be considered: For typical optical fibers used in optical networks, a length difference of 1 meter between the two optical fibers would cause a delay difference of approximately 5 microseconds. For typical optical networks, length differences of up to 1.6 meters may occur, causing a delay difference of up to 8 microseconds. If the clock rate, at which the shift registers SRTX1, SRRX1, SRRX2 operate and at which the sequences of output values are generated, is 1,000,000,000 values per second, equal to 1 GigaBit/sec, and if the shift register has a length of N=14 storage elements configured such that it provides a sequence of output values of the length 2N -1=16383 values, then this sequence would repeat itself after a time interval of 16.383 microseconds. Thus, also the shift register would also repeat its state after 16.383 microseconds. Thus, the maximum delay difference that can be measured is 16.383/2≈=8.1 microseconds. Furthermore, a difference in time between two consecutive states of the shift register would be equal to 1 nanosecond. Thus, the maximum absolute accuracy, at which the delay difference can be measured, is 2 nanoseconds.

As it has been explained with reference to the Figures 3a and 3b, the shift register SRTX1 may be implemented as a Fibonacci linear feedback shift register or a Galois linear feedback shift register. The common feature between these two possible implementations is, that both implementations generate a same output sequence, as it has been described in detail with reference to the Figure 3a and 3b. A further alternative implementation of the shift register SRTX1 can be given in the form of a microprocessor and a storage device, wherein a sequence of values equal to a sequence of output values of a linear feedback shift register are stored in the storage device and read out from the storage device by the microprocessor. The values of the sequence are provided by the microprocessor at a clock rate equal to the clock rate at which the shift register SRTX1 is operated. As an even further implementation of the shift register SRTX1, a signal generation device provides at its output an output signal, which indicates a sequence of values equal to a sequence of output values of a linear feedback shift register. The signal generation device may be a circuit providing the output signal as an electrical signal. The output signal changes in time at a rate equal to the clock rate at which the shift register SRTX1 is operated.

Figure 4 shows the devices ND1, ND2, as previously described with respect to Figure 1. With respect to the Figure 4, a second alternative way of determining the difference of the transmission delays using a determined state of the shift register SRRX1 and the received subset of the consecutive values OPVS2, is now described in detail.

The device ND2 contains furthermore a second linear feedback shift register SRRX2. The shift registers SRRX1, SRRX2 are configured, such that they generate the same output sequences at their outputs OP1, OP2 as the shift register SRTX1. In this example, the shift registers SRRX1, SRRX2 have the same length N=4 as the shift register SRTX1 of the device ND1. Furthermore, the shift registers SRRX1, SRRX2 are Fibonacci shift registers described by the same characteristic polynomial $x^4 + x^3 + 1$ as a Fibonacci linear feedback shift register implementation of the shift register SRTX1. At the output OP1 of the shift register SRRX1, the output value OPVRX1 is present. At the output OP2 of the shift register SRRX2, the output value OPVRX2 is present.

The shift register SRTX1 of the device ND1 is initialized and operated at the provided clock rate, as previously described above. By doing so, the sequence OPVS of output values OPV is generated. The sequence OPVS repeats itself after $2^N -1$ values.

The consecutive values OPVS1 of the sequence OPVS are transmitted by the device ND1 over the transmission line TL1 to the device ND2, using the transmission signal TS1 carrying the consecutive values OPVS1.

At the device ND2, the transmission signal TS1 is received via the transmission line TL1. By receiving the transmission signal TS1, at least a subset of the consecutive values OPVSV are received. The values of the subset are recovered from the transmission signal TS1. The received subset has a length that is equal to or greater than the length N of the shift register SRRX1. The subset contains successive values of the consecutive values OPVS1.

The shift register SRRX1 is synchronized to the received subset of consecutive values OPVS1, and then operated at the provided clock rate.

The provided clock rate of the clock-pulse generator of the device ND2 is either chosen as the same predetermined clock rate at which the clock-pulse generator of the device ND1 runs. Another solution is, to choose this clock rate as a clock rate that is recovered from the received transmission signal TS1 by a clock-data recovery circuit.

The delay of the transmission line TL1 causes the transmission delay TD1 to the transmitted subset values that were generated by the shift register SRTX1. By initializing the shift register SRRX1 with successive values of the received subset and then operating the shift register SRRX1, the state of the shift register SRRX1 is constantly delayed in comparison to the state of the shift register SRTX1 by this transmission delay TD1. In other words, at a certain time instance, the difference of the states of the shift register SRTX1 and of the shift register SRRX1 expresses this transmission delay TD1.

Further consecutive values OPVS2 of the sequence OPVS are transmitted by the device ND1 over another transmission line TL2 to the device ND2, using the transmission signal TS2 carrying the consecutive values OPVS2. The transmission line TL2 introduces the transmission delay TD2, which causes a delay of the transmission signal TS2 and thus a delay of the transmitted consecutive values OPVS2. The transmission delay TD2 may differ from the transmission delay TD1.

At the device ND2, a subset of the consecutive values OPVS2 are received via the transmission line TL2. The received subset has a length that is equal to or greater than the length N of the shift register SRRX2. The subset contains successive values of the consecutive values OPVS2.

The shift register SRRX2 is synchronized to the received subset of consecutive values OPVS2. The subset of consecutive values is at least of the length N.

The delay of the transmission line TL2 causes the transmission delay TD2 to the transmitted subset values that were generated by the shift register SRTX1. By initializing the shift register SRRX2 with successive values of the received subset and then operating the shift register SRRX2, the state of the shift register SRRX2 is constantly delayed in comparison to the state of the shift register SRTX1 by this transmission delay TD2. In other words, at a certain time instance, the difference of the states of the shift register SRTX1 and of the shift register SRRX2 expresses this transmission delay TD2.

Since the difference of the states of the shift register SRRX1 and of the shift register SRTX1 expresses the transmission delay TD1, and since the difference of the states of the shift register SRRX2 and of the shift register SRTX1 expresses the transmission delay TD2, the difference of the states of the shift register SRRX1 and of the of the shift register SRRX2 expresses the difference $\Delta TD$ of the transmission delays as

$$\Delta TD = \left| TD2 - TD1 \right| \ .$$

For determining the difference $\Delta TD$ between the transmission delays TD1, TD2, a state of the shift register SRRX1 and a state of the shift register SRRX2 are determined. The difference $\Delta TD$ between the transmission delays TD1, TD2 can be determined in two alternative ways.

A first alternative way to determine the difference between the transmission delays TD1, TD2 is described hereafter: At a same time instance, a state of the shift register SRRX1 and a state of the shift register SRRX2 are determined. A state of a shift register SRRX1, SRRX2 is equal to the sequence of values stored in the storage elements of the shift register SRRX1, SRRX2 . Since the length N and the characteristic polynomial of the shift registers SRRX1, SRRX2 are known, the sequence of possible states of the shift registers SRRX1, SRRX2 is uniquely defined, as shown in Figure 2. Thus, by examining the states of the shift registers SRRX1, SRRX2 at a specific time instance, the number of states NBRST, by which the determined states differ, can be determined. Using the known provided clock rate CR at which the shift registers SRRX1, SRRX2 are operated, the difference $\Delta TD$ of the transmission delays TD1, TD2

can be determined as

$$\Delta TD = NBRST \cdot CR .$$

A second alternative way to determine the difference between the transmission delays $TD1$, $TD2$ is described hereafter: At a first time instance, a state of the shift register SRRX1 is determined. At this first time instance, a clock is started. Furthermore, the state the shift register SRRX2 is checked as time goes by. At a next second time instance, at which the shift register SRRX2 takes on a state that is equal to the determined state of the shift register SRRX1, the clock is stopped. The time value, that is then given by the clock, is equal to the difference $\Delta TD$ of the transmission delays $TD1$, $TD2$.

The maximum delay difference that can be determined by the proposed method is defined by the time interval after which the sequence of output values repeats itself. It can not be known in advance, which of the transmission lines TL1, TL2 causes a greater transmission delay. Thus, when considering the cycle C of states shown in Figure 2, it can not be known, whether at one certain time instance the shift register SRRX1 is in a state that is ahead of the state of the shift register SRRX2, or whether the shift register SRRX1 is in a state that is behind of the state of the shift register SRRX2. For example, at one certain time instance, the shift register SRRX1 may be in the state ST15, while the shift register SRRX2 is in the state ST2. Two conclusions may be drawn: either the shift register SRRX2 is 12 states behind the shift register SRRX1, in which case the transmission line TL2 causes a greater delay than the transmission line TL1, or the shift register SRRX2 is three states ahead of the shift register SRRX2, in which case the transmission line TL1 causes a greater delay than the transmission line TL2. Therefore, the maximum delay difference, which can be measured, is equal to half the time interval, after which the cycle C repeats its states. This is also half the time interval, after which the sequences of output values of the shift registers SRTX1, SRRX1, SRRX2 of Figure 1 repeat themselves.

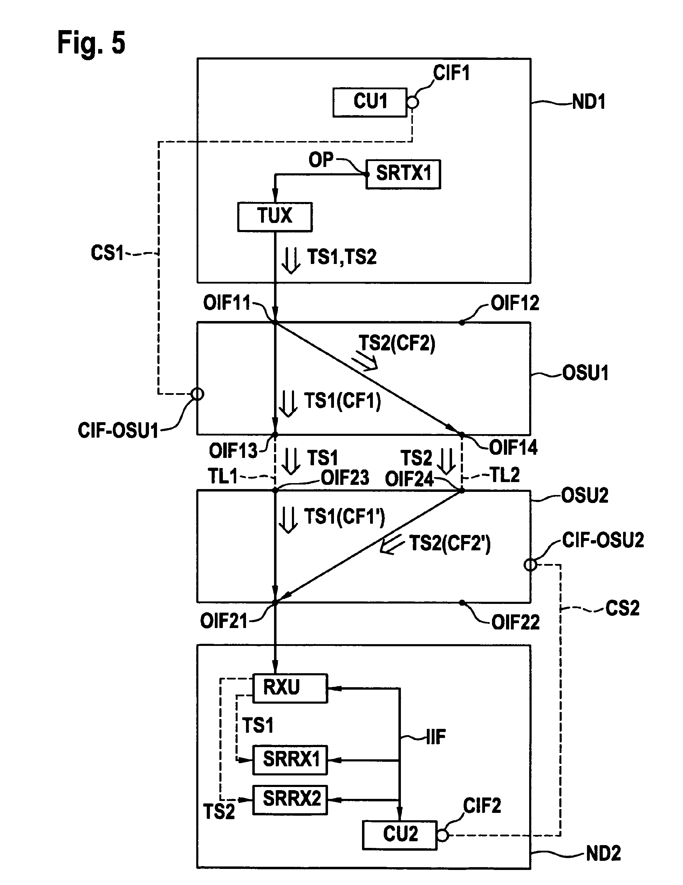

Figure 5 shows the network devices ND1, ND2 according to an alternative solution of this embodiment. The device ND1 contains the shift register SRTX1 with its output OP, as it has been described in detail above with reference to the Figures 1, 2 and 3a. The shift register SRTX1 is connected to a transmission unit TXU, which generates the transmission signals TS1, TS2, as previously described above.

The transmission unit TXU is connected to an interface OIF11 of an optical switching unit OSU1. The optical switching unit OSU1 contains at least three optical interfaces OIF11, OIF13, OIF14. The transmission line TL1 is connected to the interface OIF13, while the transmission line TL2 is connected to the interface OIF14.

The device ND1 contains a control unit CU1, which itself contains a control interface CIF1. Via the interface CIF1, the control unit CU1 provides a control signal CS1 for controlling a configuration of the optical switching unit OSU1 via an interface CIF-OSU1 contained in the optical switching unit OSU1.

The device ND2 contains the shift registers SRRX1, SRRX2, as it has been described in detail above with reference to the Figures 1 and 2. The input of the shift registers SRRX1, SRRX2 are connected to a reception unit RXU. The reception unit RXU converts the received transmission signals TS1, TS2 into successive values, which then are used to initialize the shift registers SRRX1, SRRX2 as previously described above. The reception unit RXU is connected to an interface OIF21 of an optical switching unit OSU2. The optical switching unit OSU2 contains at least three optical interfaces OIF21, OIF23, OIF24. The transmission line TL1 is connected to the interface OIF23, while the transmission line TL2 is connected to the interface OIF24.

The device ND2 contains a control unit CU2, which itself contains a control interface CIF2. Via the interface CIF2, the control unit CU2 provides a control signal CS2 for controlling a configuration of the optical switching unit OSU2 via an interface CIF-OSU2 contained in the optical switching unit OSU2. The control unit CU2 furthermore controls a configuration of the reception unit RXU and of the shift registers SRRX1, SRRX2 via an internal interface IIF.

While the transmission unit TXU1 generates and provides the transmission signal TS1, the control unit CU1 configures the optical switching unit OSU1 in a configuration state CF1, such that it connects the interface OIF11 with the interface OIF13. In this configuration state CF1, the optical switching unit OSU1 is configured, such that it transmits the transmission signal TS1 from the interface OIF1 to the interface OIF13.

At the same time, the control unit CU2 configures the optical switching unit OSU2 in a configuration state CF1', such that it connects the interface OIF23 with the interface OIF21. In other words, in the configuration state CF1', the optical switching unit OSU2 is configured, such that it transmits the transmission signal TS1 from the interface OIF23 to the interface OIF21.

In the configuration state CF1', the control unit CU2 configures the reception unit RXU, such that it initializes the shift register SRRX1 with at least N successive values obtained from the transmission signal TS1, as previously described above with reference to Figure 1. Once the initialization of the shift register SRRX1 is completed, the control unit CU2 configures the shift register SRRX1, such that it operates automatically at a clock rate provided by a clock-pulse generator not shown in Figure 5. In other words, the shift register SRRX1 is configured, such that it operates autonomously.

Once the shift register SRRX1 operates automatically, a change of configuration states is performed at the devices ND1, ND2. The device ND1 changes from the configuration state CF1 to a configuration state CF2. The device ND2 changes from the configuration state CF2 to a configuration state CF2'.

In the configuration state CF2, the transmission unit TXU generates and provides the transmission signal TS2. The control unit CU1 then configures the optical switching unit OSU1 in the configuration state CF2, such that it connects the interface OIF11 with the interface OIF14. In other words, in the configuration state CF2, the optical switching unit OSU1 is configured, such that it transmits the transmission signal TS2 from the interface OIF11 to the interface OIF14.

The control unit configures the optical switching OSU2 in a configuration state CF2', such that it connects the interface OIF 24 to the interface OIF21.

In the configuration state CF2', the control unit CU2 configures the reception unit RXU, such that it initializes the shift register SRRX2 with at least N successive values obtained from the transmission signal TS2, as previously described above with reference to Figure 1. Once the initialization of the shift register SRRX2 is completed, the control unit CU2 configures the shift register SRRX2, such that it operates automatically at a clock rate provided by a clock-pulse generator not shown in Figure 5. In other words, the shift register SRRX2 is configured, such that it operates autonomously.

Once the shift registers SRRX1, SRRX2 have been configured, such that they operate automatically and autonomously, the control unit CU2 determines a state of the shift register SRRX1 and a state of the shift register SRRX2 for determining a difference between the transmission delays of the transmission lines TL1, TL2, as previously described with reference to the Figures 1 and 2. As illustrated in Figure 5, the optical switching units OSU1, OSU2 are devices, that are separate from the network device ND1, ND2. Alternatively, the optical switching unit OSU1 is an integral part of the network device ND1, while the optical switching unit OSU2 is an integral part of the network device ND2.

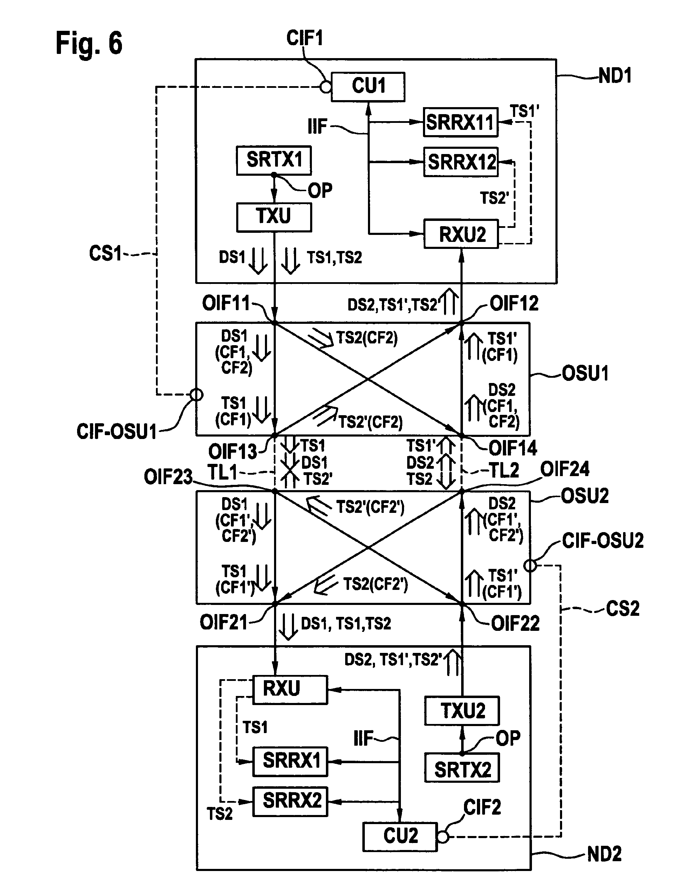

According to the Figure 5, the device ND2 is adapted to determine a transmission delay difference of the transmission lines TL1 and TL2, using transmission signals TS1 and TS2 that are generated by the device ND1. For determining a transmission delay difference between the transmission lines TL1 and TL2, at the device ND1 and also at the device ND2, the devices ND1 and ND2 contain further elements according to an alternative solution as shown in Figure 6 and explained in detail now on.

For determining the transmission delay difference at the device ND1, the device ND2 contains a shift register SRTX2 equivalent to the shift register SRTX1, as well as a transmission unit TXU 2 equivalent to the transmission unit TXU, for generating transmission signals TS1', TS2' that are to be transmitted along the transmission lines TL1, TL2 from the device ND2 to the device ND1. This transmission unit TXU2 is connected to an optical interface OIF22 of the optical switching unit OSU2. Furthermore, the control device CU2 configures the optical switching unit OSU2 in the configuration state CF1', such that it connects the interface OIF22 with the interface OIF24. In the configuration state CF2', the control device CU2 configures the optical switching unit OSU2, such that it connects the interface OIF22 with the interface OIF23.

For determining the transmission delay difference at the device ND1, the device ND1 contains a reception unit RXU2 that is equivalent to the reception unit RXU, as well as reception shift registers SRRX1 1, SRRX12, that are equivalent to the shift registers SRRX1, SRRX2. The reception unit RXU2 is connected to an optical interface OIF12 of the optical switching unit OSU1. Furthermore, the control device CU1 configures the optical switching unit OSU1 in the configuration state CF1, such that it connects the interface OIF14 with an interface OIF12. In the configuration state CF2, the control device CU1 configures the optical switching unit OSU1, such that it connects the interface OIF13 with the interface OIF12. Even furthermore, the control unit CU1 configures the reception shift registers SRRX11, SRRX12 and the reception unit RXU2 of the device ND1 for determining the transmission delay difference, as it has been described previously with respect to the control unit CU2, the reception unit RXU and the shift registers SRRX1, SRRX2.

The method of determining a transmission delay difference of the transmission lines TL1, TL2 has been described up to now, using signals TS1, TS2, TS1', TS2' that are transmitted over the transmission lines TL1, TL2. The devices ND1, ND2 may furthermore generate and transmit data signals DS1, DS2 over the transmission lines TL1, TL2. The data signals DS1, DS2 may be used for simultaneously transmitting data values.

The transmission unit TXU generates the optical data signal DS1 within a bandwidth range, which is disjoint to the bandwidth range of the signals TS1, TS2. The optical data signal DS1 is generated by the transmission unit TXU based on data, which is provided by a data generation unit of the device ND1 not shown in Figure 6. The control unit CU1 configures the optical switching unit OSU1 in the configuration state CF1 and in the configuration state CF2, such that it transmits the data signal DS1 from the interface OIF1 to the interface OIF13.

The transmission unit TXU2 generates the optical data signal DS2 within a bandwidth range, which is disjoint to the bandwidth range of the signals TS1', TS2'. The optical data signal DS2 is generated by the transmission unit TXU2 based on data, which is provided by a data generation unit of the device ND2 not shown in Figure 6. The control unit CU2 configures the optical switching unit OSU2 in the configuration state CF1' and in the configuration state CF2', such that it transmits the data signal DS2 from the interface 0IF22 to the interface 0IF24.

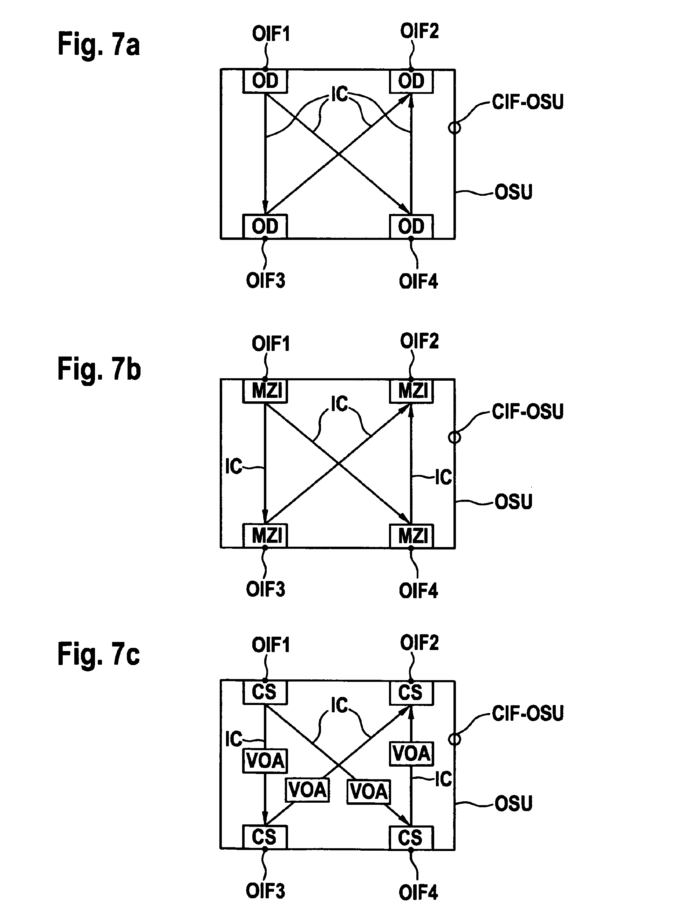

Figures 7a, 7b, 7c show different embodiments of an optical switching unit OSU, that may be used as the optical switching units OSU1, OSU2 shown in the Figures 5 and 6.

Figure 7a shows an optical switching unit OSU containing four optical interfaces OIF1, OIF2, OIF3, OIF4 and a configuration interface CIF-OSU. The optical switching unit OSU provides interconnections IC between the optical interfaces OIF1, OIF2, OIF3, OIF4. The switching unit OSU contains at the optical interfaces OIF1, OIF2, OIF3, OIF4 optical deflectors OD. The deflectors OD are configurable to combine optical signals coming from different interconnections IC arriving at an optical deflector OD, as well as to split optical signals arriving at an optical deflector OD among different interconnections IC.

The optical deflectors OD are micro-electro-mechanical switches (MEMS). The deflectors OD have a 2 x 2 architecture for providing the interconnections IC between the interfaces OIF1, OIF2, OIF3, OIF4. The deflectors are composed of an optical subsystem providing the interconnections and an electrical driver interface as the configuration interface CIF-OSU. The optical switching function is realized by a silicon MEMS chip, on which a mirror can be moved in and out of the optical path by electrostatic actuation.

Figure 7b shows the optical switching unit OSU with its elements as described with reference to Figure 7a, but not with the optical deflectors. Instead of the optical deflectors, Mach-Zehnder Interferometers MZI are placed at the interfaces OIF1, OIF2, OIF3, OIF4. The Mach-Zehnder Interferometers MZI are configurable to combine and / or split optical signal, as previously described with respect to the optical deflectors OD shown in Figure 7a.

Figure 7c shows the optical switching unit OSU with its elements as described with reference to Figure 7a, but not with the optical deflectors. The switching unit OSU contains at the optical interfaces OIF1, OIF2, OIF3, OIF4 devices CS, which are optical splitters or optical combiners. Furthermore, for controlling an optical connection between the interfaces OIF1, OIF2, OIF3, OIF4, the optical switching unit OSU contains Variable Optical Attenuators VOA, which interconnect the interfaces OIF1, OIF2, OIF3, OIF4. The Variable Optical Attenuators VOA are configurable to attenuate a power level of an optical input signal depending on the wavelength of the optical input signal. Thus, a Variable Optical Attenuators VOA is adapted to suppress or filter out an optical signal of one wavelength while it transmits another optical signal of another wavelength.

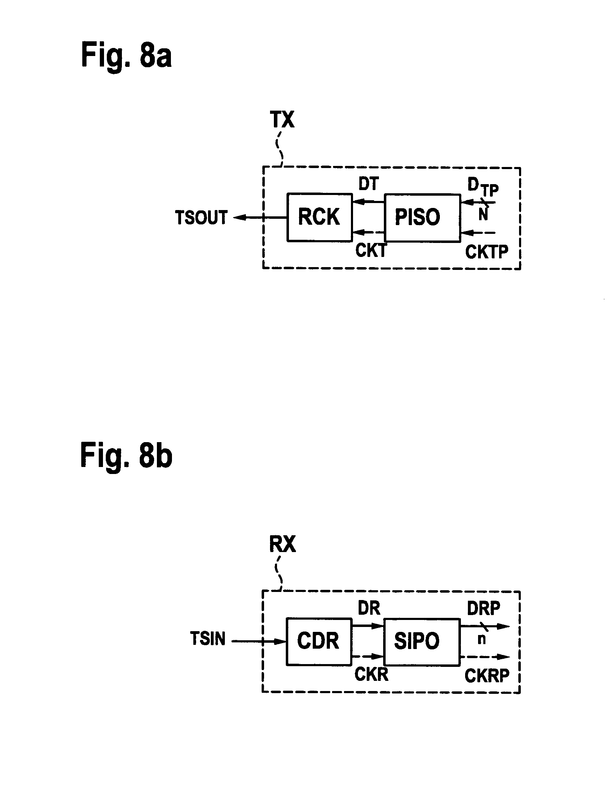

Figure 8a shows a transmission unit TX, which is a preferred embodiment of the transmission units TXU, TXU2 shown Figures 5 and 6. The transmission unit TX receives values DTP from a shift register or, in the case that a transmission of data values shall be carried out, from a data generation unit. These values DTP are received in sets of n values at a clock rate CKTP. A parallel to serial converter PISO converts the received sets of values DTP into a sequence of values DT. These values DT are read out from the parallel to serial converter PISO by a reclocking device RCK at a clock rate CKT. The clock rate CKT is equal to n times the clock rate CKTP. The reclocking device RCK then transmits the data values DT by means of an output signal TSOUT.

Figure 8b shows a reception unit RX, which is a preferred embodiment of the reception transmission units RXU, RXU2 shown Figures 5 and 6. The reception unit RX receives an input TSIN. A clock data recovery circuit CDR recovers values DR from the signal TSIN, as well as a clock rate CKR. At the clock rate CKR, the clock data recovery circuit CD writes the values DR into a serial to parallel converter SIP. The serial to parallel converter SIP converts the values DR into sets of n values DRP. These sets of values DRP are then provided by the serial to parallel converter SIP at a clock rate CKRP to a shift register or, in the case that a transmission of data values shall be carried out, to a data reception unit. The clock rate CKR is equal to n times the clock rate CKRP.

According to a preferred embodiment, the transmission unit TX of Figure 8a and the reception unit of Figure 8b carry out data transmission of the values DT, DTP, DR, DRP compliant with the document IEEE 802.3, with the reference as given above.

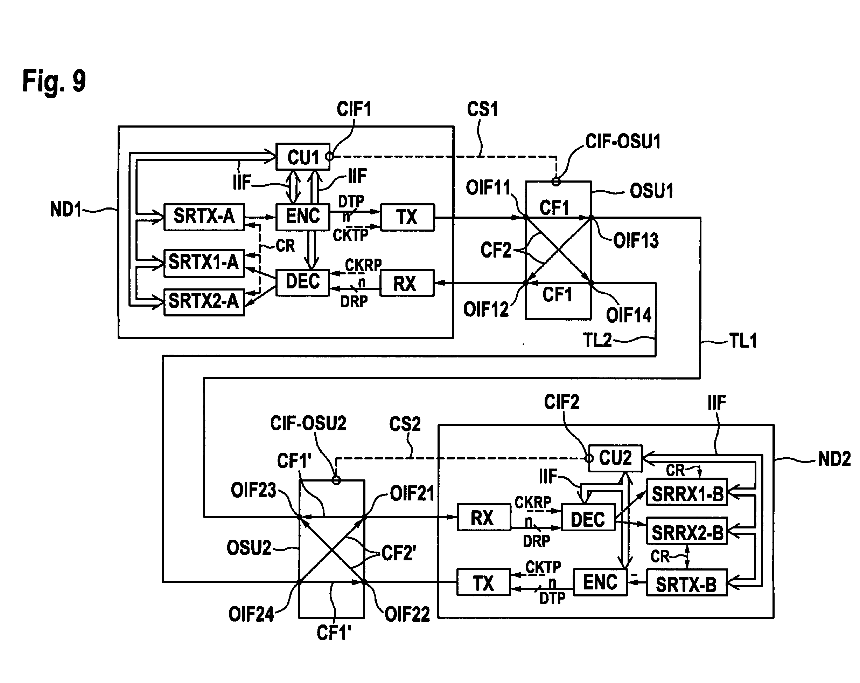

Figure 9 shows the devices ND1 and ND2, according to a further embodiment. The device ND1 is connected via the optical switching unit OSU1 to the transmission lines TL1, TL2, as previously described with respect to the Figures 5 and 6. The device ND2 is connected via the optical switching unit OSU2 to the transmission lines TL1, TL2, as it has been previously described with respect to the Figures 5 and 6.

The device ND1 contains a transmission unit TX and a reception unit RX, as it has been described previously with respect to the Figures 8A and 8B, as well as a shift register SRTX-A, which generates output values, which are to be transmitted by the device ND1 over the transmission lines TL1, TL2 to the device ND2. The shift register SRTX-A is connected to an encoder ENC, which encodes the output values of the shift register SRTX-A. The encoder ENC forwards the encoded output values to the transmission unit TX. The encoded data DTP is received by the transmission unit TX in sets of n bits at a clock rate CKTP, which is provided by a clock pulse generating unit not shown in Figure 9. The shift registers SRTX-A, SRRX1-A, SRRX2-A are operated at a clock rate CR, which is provided by a clock pulse generating unit not shown in Figure 9. The device ND1 contains furthermore a reception unit RX for receiving data values. The received data values DRP are forwarded by the reception unit RX in sets of n bits to the decoding unit DEC at a clock rate CKRP, which is provided by a clock pulse generating unit not shown in Figure 9.

Values, that are decoded by the decoding unit DEC, are forwarded from the decoding unit DEC to the shift registers SRRX1-A, SRRX2-A at the clock rate CR. Furthermore, the device ND1 contains a control unit CU1, which controls over a control interface CIF1 the optical switching unit OSU1, as it has been described previously with respect to Figure 6. Furthermore, the control unit CU1 controls via an internal interface IIF the encoding unit ENC, the decoding unit DEC, as well as the shift registers SRTX-A, SRRX1-A, SRRX2-A.

The device ND2 contains a reception unit RX, a transmission unit TX, a decoding unit DEC and an encoding unit ENC, which are equivalent to the same types of units as previously described with respect to the device ND1. Furthermore, the device ND2 contains a shift register SRTX-B, that is connected to the encoding unit ENC. This shift register SRTX-B generates the output values, that are to be transmitted by the device ND2 over the transmission lines TL1, TL2 to the device ND1. Furthermore, the device ND2 contains two reception shift registers SRRX1-B, SRRX2-B, which receive data values from the decoder DEC, and which are used to determine the difference of the transmission delays of the transmission lines TL1, TL2. Furthermore, the device ND2 contains a control unit CE2, that is complementary to the control unit CU1 of the device ND1.

The encoding of output values of the shift registers SRTX-A and SRTX-B is preferably carried out according to the document IEEE 802.3, such, that according to the technology 1000base-X, an output value of a shift register is transmitted, by transmitting the character K28.5, which is then followed by a data character defining the transmitted output value. For example, for transmitting the value '0', the character K28.5 is transmitted followed by the character Dx0.y, and in the case that a '1' is transmitted, the character K28.5 followed by the character Dx1.y is transmitted. This is a first way to encode output values of the shift register SRTX-A and SRTX-B.

The decoding units DEC receive the transmitted characters and will detect the transmission of values, by examining received characters and comparing the received characters to the characters K28.5, Dx0.y, Dx1.y. In the case, that such characters are received, the decoding unit DEC of a device ND1, ND2 detects, that the encoding unit ENC of the other device ND2, ND1 transmits output values of a shift register according to this first method of encoding and decoding.

Furthermore, the encoding units ENC and the decoding units DEC are adapted to operate not only in a first encoding and decoding manner, but also in a second encoding and decoding manner. This second encoding manner is preferably carried out, such that the encoding devices ENC transmit an output value of '0' by transmitting the data character K28.5 followed by the data character Dx2.y, while an output value of '1' is transmitted by transmitting a data character K28.5 followed by a data character Dx3.y. The decoding units DEC compare received data characters to the possible encoding characters K28.5, Dx2.y, Dx3.y of the second encoding manner, for decoding output values '0', '1' from the received data characters.

In other words, the encoding units ENC are adapted to encode output values of the shift registers SRTX-A and SRTX-B by means of two different encoding algorithms, while the decoding units DEC are adapted to decode these output values from received data characters by two different decoding algorithms, which are complementary to the two different encoding algorithms. Furthermore, the decoding units DEC are adapted to detect, whether a transmission is carried out according to the first encoding and decoding algorithms or according to the second encoding and decoding algorithms, depending on the received data characters.

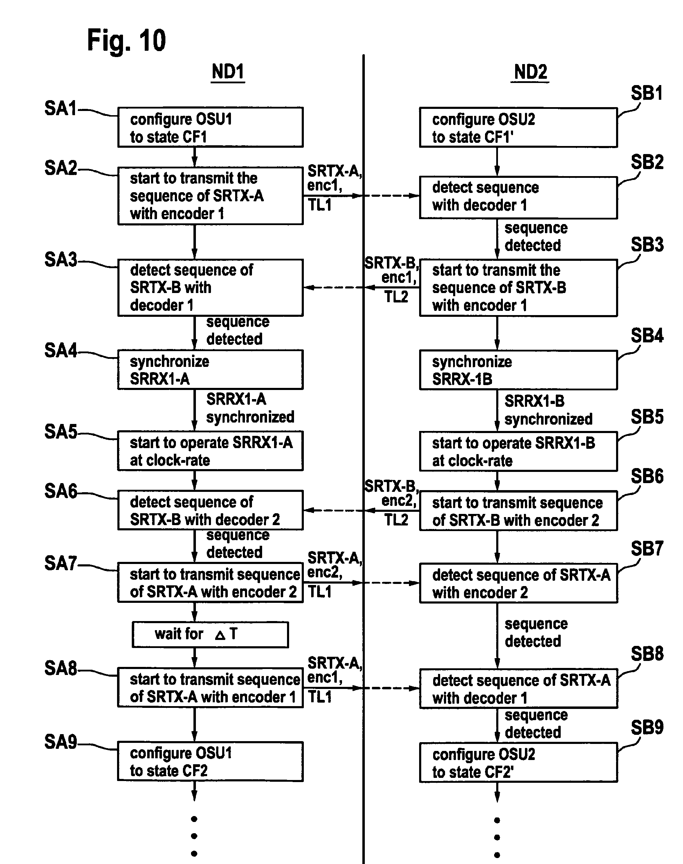

Figure 10 shows a protocol with different states of the devices ND1, ND2, as well as indications of output values transmitted over the transmission lines TL1, TL2. This protocol will now be described in detail with respect to Figure 10, while it has to be taken into consideration, that the abbreviations used in the different states of the devices ND1, ND2 are to be seen in context with the different sub devices of the devices ND1, ND2 shown in the Figure 9.

At the beginning of this protocol, the device ND1 is in a state SA1, in which it configures the optical switching unit OSU1 to the configuration state CF1, as previously described with respect to the Figure 6.

The device ND1 proceeds to a step SA2, in which it starts to transmit the sequence of output values of the shift register SRTX-A encoded with the first encoding algorithm. Thus, output values of the shift register SRTX-A encoded by the first encoder enc1 are transmitted over the transmission line TL1.

The device ND2 has previously configured the optical switch unit OSU2 to the configuration state CF1', as it has been described previously with respect to Figure 6, which is carried out in the state SB1. The device ND2 proceeds to a state SB2, in which it tries to detect with its decoding unit a transmission of sequential values by running the first decoding algorithm. Upon detecting, that values are received and decoded by the first decoding algorithm, the device ND2 changes its state from state SB2 to a state SB3.

In this state SB3, the device ND2 starts to transmit the sequence of the output values of the shift register SRTX-B encoded with the first encoding algorithm. Therefore, sequential values of the shift register SRTX-B encoded by the first algorithm enc1 are transmitted over the transmission line TL2.

The device ND1 has meanwhile changed from the state SA2 to the state SA3 in this state SA3, the device ND1 tries to detect sequential values of the shift register SRTX-B by running the first decoding algorithm. Upon detecting transmitted sequential values decoded by the first decoding algorithm, the device ND1 changes its state from the state SA3 to a state SA4. In this state SA4, the device ND1 synchronizes its first reception shift register SRRX1-A to the received and decoded values. Once, the shift register SRRX1-A is synchronized, the device ND1 proceeds from the state SA4 to a state SA5, in which it starts to operate the shift register SRRX1-A at the provided clock rate.

Meanwhile, the device ND2, after having started to transmit the sequential output values of the shift register SRTX-B in the state SB3, has proceeded to a state SB4, in which it synchronizes its first reception shift SRRX1-B to the received sequential values. Once, the shift register SRRX1-B is synchronized, the device ND2 proceeds from the state SB4 to a state SB5, in which it starts to operate the shift register SRRX1-B at the provided clock rate.

Then, the device ND2 proceeds from the state SB5 to a state SB6, in which it starts to transmit the output values of the shift register SRTX-B encoded with the second encoding algorithm. Therefore, sequential values of the shift register SRTX-B encoded by the second encoding algorithm enc2 are transmitted over the second transmission line TL2.

Meanwhile, the device ND1 has proceeded from the state SA5 to a state SA6, in which it tries to detect values with its second decoding algorithm. Once the device ND1 detects the reception of values with this second decoding algorithm, the device ND1 proceeds from the state SA6 to a state SA7. In this state SA7, the device ND1 starts to transmit sequential values of the shift register SRTX-A encoded with the second encoding algorithm. Therefore, values of the shift register SRTX-A encoded by the second encoding algorithm enc2 are transmitted over the first transmission line TL1. The device ND1 remains in this state SA7, by waiting for a time interval □D, before proceeding to a state SA8.

Meanwhile, the device ND2 has proceeded from the state SB6 to a state SB7. In this state SB7, the device ND2 tries to detect a reception of values with its second decoding algorithm. Once, it has detected the received values by using its second decoding algorithm, the device ND2 proceeds from the state SB7 to a state SB8. In this state SB8, the device ND2 tries to detect a reception of values using its first decoding algorithm.

Meanwhile, after the device ND1 has proceeded to the state SA8, the device ND1 stops to transmit sequential output values of the shift register SRTX-A encoded with the first encoding algorithm. Therefore, output values of the shift register SRTX-A encoded by the first algorithm for encoding enc1 are transmitted over the first transmission line TL1. Once the device ND2 has detected a reception of values by using this first decoding algorithm, the device ND2 proceeds from the state SB8 to a state SB9. Furthermore, after starting to transmit the output values of the shift register SRTX-A in the state SA8 using the first encoder, the device ND1 proceeds to a state SA9. In these states SA9, SB 9, each of the devices ND1, ND2 have aligned their reception shift register SRRX1-A, SRRX1-B to received values.

Furthermore, each of the devices ND1, ND2 can be sure that the other device ND2, ND1 has finished the synchronization of its first shift register SRRX1-A, SRRX1-B to the received values.

Therefore, both devices ND1, ND2 may now change the configuration of the optical switching units OSU1, OSU2, for using instead of the transmission lines TL1, TL2, the other transmission line TL2, TL1 for transmitting and receiving values.

Thus, the low-level protocol shown in Figure 10 may be proceeded by further states equivalent to the states SA2 to SA8 as well as the states SB2 to SB8, in which the reception shift register SRRX1-A, SRRX1-B are replaced by the shift register SRRX2-A, SRRX2-B, and in which the transmission lines TL1, TL2 are replaced by the other transmission line TL2, TL1. After carrying out such further steps, also the shift registers SRRX2-A, SRRX2-B of the devices ND1 and ND2 will be synchronized to received values.

The devices ND1, ND2 may then perform the proposed method of determining the difference of the transmission delays of the transmission lines TL1, TL2, as it has been proposed previously above. Furthermore, the devices ND1, ND2 may change back the configuration of the optical switching units OSU1, OSU2 to the configuration states CF1, CF1'.

**Second embodiment**

Figure 1 shows devices ND1, ND21, for determining a difference between transmission delays according to a second embodiment. The device ND1 is the same device as previously described with respect to Figure 5. Furthermore, an optical switching unit OSU1 connects the transmission unit TXU of the device ND1 with the transmission lines TL1, TL2, as previously described with respect to the Figure 5. The transmission unit TXU receives from the shift register SRTX1 at the output OP values of the output sequence OPVS. The transmission unit TXU transmits first consecutive values OPVS1, by generating a transmission signal TS1 and transmitting the signal TS1 into the first transmission line TL1. Furthermore, the transmission unit TXU transmits second consecutive values OPVS2, by generating a transmission signal TS2 and transmitting this transmission signal TS2 into the transmission line TL2. For transmitting the transmission signals TS1, TS2 into the transmission lines TL1, TL2, the control unit CU1 of the device ND1 configures via a control signal CS1 the optical switching unit OSU1, as previously described with respect to the Figure 5.

On the receiving side, the device ND21 receives at least a subset of the first consecutive values OPVS1 and also at least a subset of the second consecutive values OPVS2. The device ND21 does so, by receiving the transmission signals TS1, TS2 at its reception unit RXU. For doing so, the control unit CU2 of the device ND21 configures the optical switching unit OSU2, as previously described with respect to the Figure 5.

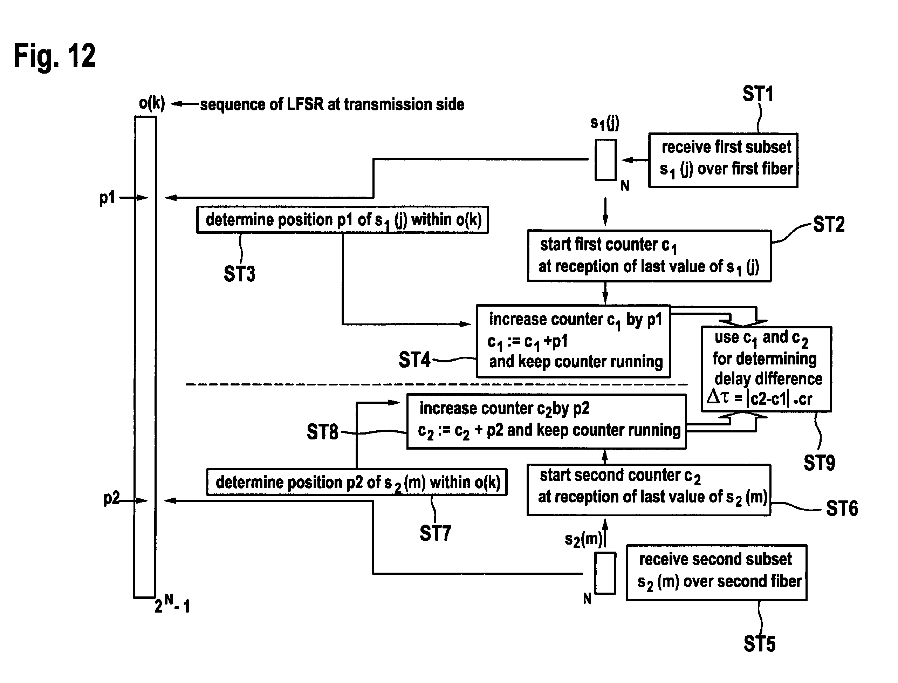

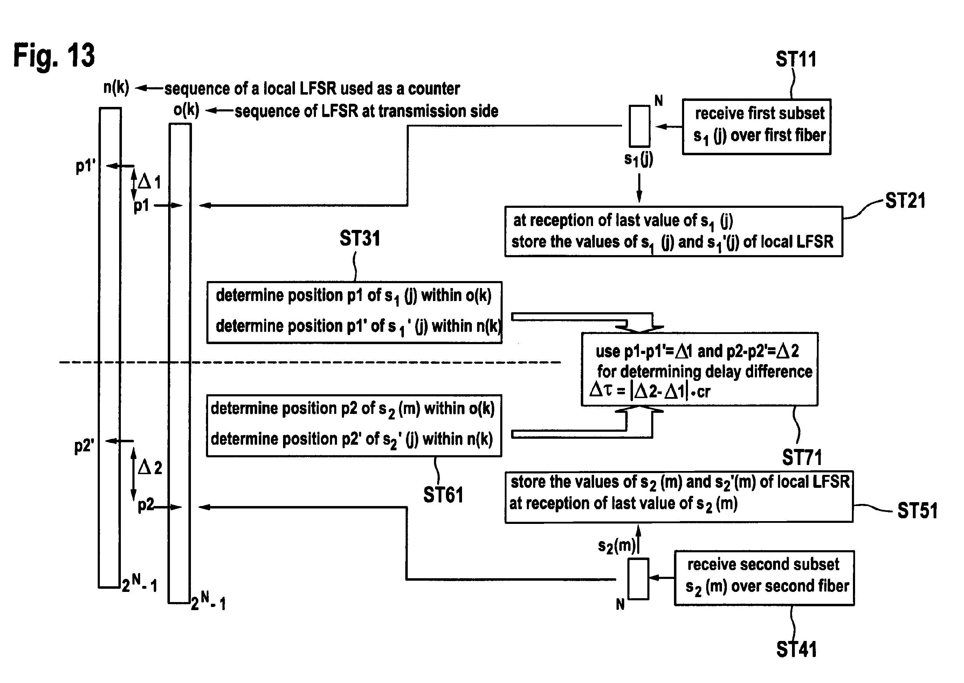

The device ND21 contains furthermore a storage device SD, which provides the sequence of output values OPVS as generated by the shift register SRTX1. The storage device SD provides these values OPVS to the control unit CU2. The control unit CU2 determines the difference between the transmission delays of the transmission lines TL1, TL2, using the received subset of the values OPVS1, the received subset of the values OPVS2 and the provided sequence of the values OPVS, as it will be described in detail with respect to the Figure 12 and 13.

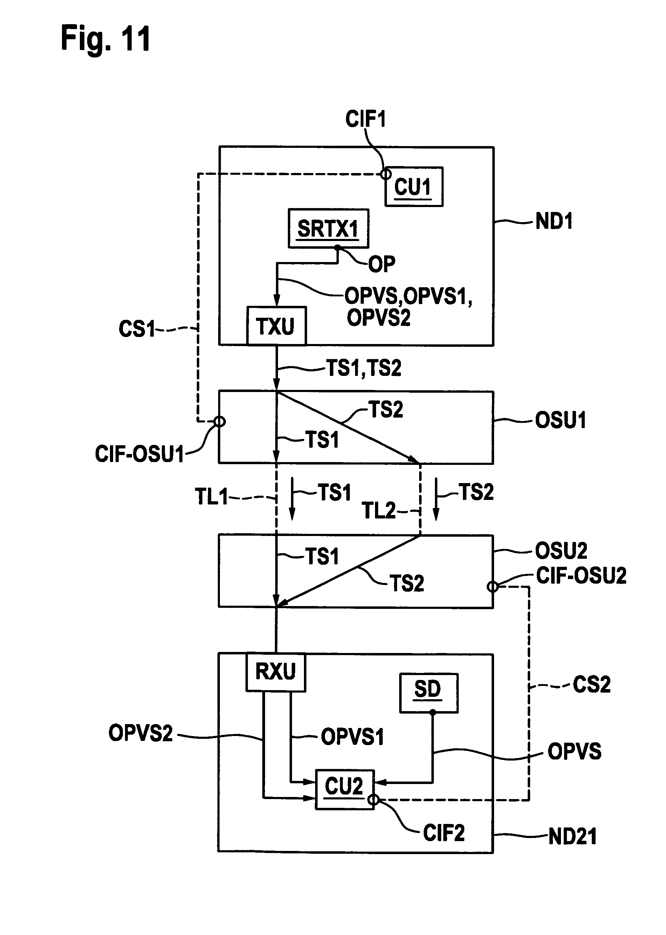

Figure 12 shows a first method for determining the difference between the transmission delays of the transmission lines, carried out by the device ND21 shown in Figure 11.

In a step ST1, a first subset of values $s_1(i)$ is received from the first transmission line. This first subset is of the length N, which is the length of the shift register SRTX1 generating the sequence of output values OPVS1, as shown at Figure 11. A counter c1 is provided by the control unit. At the reception of the last value of the subset $s_1(i)$, the counter c1 is started. The counter c1 operates at a clock rate, that is equal to the clock rate at which the shift register SRTX1 of Figure 11 is operated. The counter c1 is started with the value 0.

While the counter c1 is operated, the received subset $s_1(i)$ is compared with the provided sequence o(k), which is the output sequence of the shift register on the transmission side. Within a step ST3, a position p1 within the sequence o(k) is determined. This position p1 indicates that position, at which the following N values of the sequence o(k) are equal to the N values of the subset $s_1(i)$. In a step ST4, the counter c1 is increased by the determined value p1, and the counter c1 is further on operated at the clock rate.

At a later point of time, within a step ST5, a second subset $s_2(m)$ is received over the second transmission line. The second subset $s_2(m)$ is of the length N. Within a step ST6, at the reception of the last value of the second subset $s_2(m)$, a counter c2 is started and operated at the same clock rate as the counter c1. At the beginning, the counter c2 is initialized with the value 0. Within a step ST7, the position p2 within the sequence o(k) is determined. The position p2 is determined as that position, for which the following N values of the sequence o(k) are equal to the N values of the second subset $s_2(m)$. Within a step ST8, the counter c2 is increased by the value of the determined position p2. Furthermore the counter c2 is kept running at the clock rate of the counter c2 and the counter c1.

At a later point of time, a value of the counter c1 and a value of the counter c2 are determined at a same time instance within a step ST9. The difference of the transmission delays $\Delta\tau$ is then determined as

$$\Delta\tau = |c2-c1| \; cr,$$

wherein cr is the clock rate at which the counters c1 and c2 are operated.

Figure 13 shows an alternative solution for determining the difference of the transmission delays of the transmission lines, carried out by the control unit CU2 of the Figure 11.

In this solution, a counter is provided in the form of a local linear feedback shift register LLFSR, whose states and whose sequence of output values n(k) are used for determining the delay difference. This local linear feedback shift register LLFSR, acting as a counter, is either provided by the control unit itself, or alternatively as a separate linear feedback shift register contained within the device ND21 of Figure 11. The local linear feedback shift register LLFSR is configured, such that it generates an output sequence n(k), which is of the same length as the sequence o(k), that is generated by the shift register SRTX1 on the transmission device ND1, as shown in Figure 11. In this embodiment, both sequences n(k), o(k) have a maximum length of $2^N-1$. Furthermore, the local linear feedback shift register LLFSR is operated a same clock rate as the linear feedback shift register on the transmitting device.

Within a Step ST11 the first subset $s_1(j)$ is received from the first transmission line.

Within a step ST21, at the reception of the last value of the first subset $s_1(j)$, the values of the first subset $s_1(j)$ are stored, as well as N values $s_1'(i)$ stored within the local linear feedback shift register LLFSR are being read out at the same time instance.

Within a step ST31, a position p1 within the sequence o(k), for which the following N values of the sequence o(k) are equal to the N values of the subset $s_1(j)$ are equal, is determined. Furthermore, a position p1' within the sequence n(k) is determined. The position p1' is determined as that position, for which the following N values of the sequence n(k) are equal to the N values $s_1'(j)$ previously read out from the local shift register LLFSR are equal. The values $s_1'(j)$ represent a state of the local shift register.

At a later point of time, the second subset $s_2(m)$ is received over the second transmission line within the step ST41.

Within a step ST51, at the reception of the last value of the second subset $s_2(m)$, the values of the second subset $s_2(m)$ are stored, as well as N values $s_2'(m)$, which are stored at this same time instance within the local linear feedback shift register LLFSR and read out at this time instance. The values $s_2'(m)$ represent a state of the local shift register.

Within a step ST61, the position p2 within the sequence o(k) is determined as that position, for which the following N values of the sequence o(k) are equal to the values of the received second subset $s_2(m)$. Furthermore, a position p2' is determined within the sequence n(k). The position p2' is determined as that position within the sequence n(k), for which the following N values of the sequence n(k) are equal to the N values of the values $s_2'(j)$ previously read out from the local shift register LLFSR.

Within a step ST71, the delay difference $\Delta\tau$ is determined, using the determined positions p1, p2, p1', p2' and the clock rate $c_r$, at which the shift register LLFSR is operated. The difference $\Delta 1$ between the positions p1, p1' is determined, and also the difference $\Delta 2$ between the position p2 and p2' is determined. The delay difference $\Delta t$ is then determined as

$$\Delta\tau = |\Delta 2 - \Delta 1| cr.$$

Since in the proposed method described with respect to Figure 13, a counter is provided by a local linear feedback shift register LLFSR, the sequences of values $s_1'(j)$, $s_2'(m)$ can be interpreted as values of the provided counter LLFSR, which are determined at certain time instances.

In this second embodiment, it has up to now been proposed to use a pseudo number random sequence in the form of an output sequence of a linear feedback shift register, wherein the received subsets are preferably of the length N of the shift register.

In an alternative solution, a true random number sequence may be used instead, wherein a value M has to be provided. This value M defines the number of values that the subsets have to contain, for ensuring, that a position of a subset can be uniquely identified within the true random number sequence. Using at the sending and the receiving side the value M, it is then known of which length a subset needs to be. The true random number sequence and the corresponding value M can be determined in beforehand and then provided to the sending device and the receiving device.

**Third embodiment**

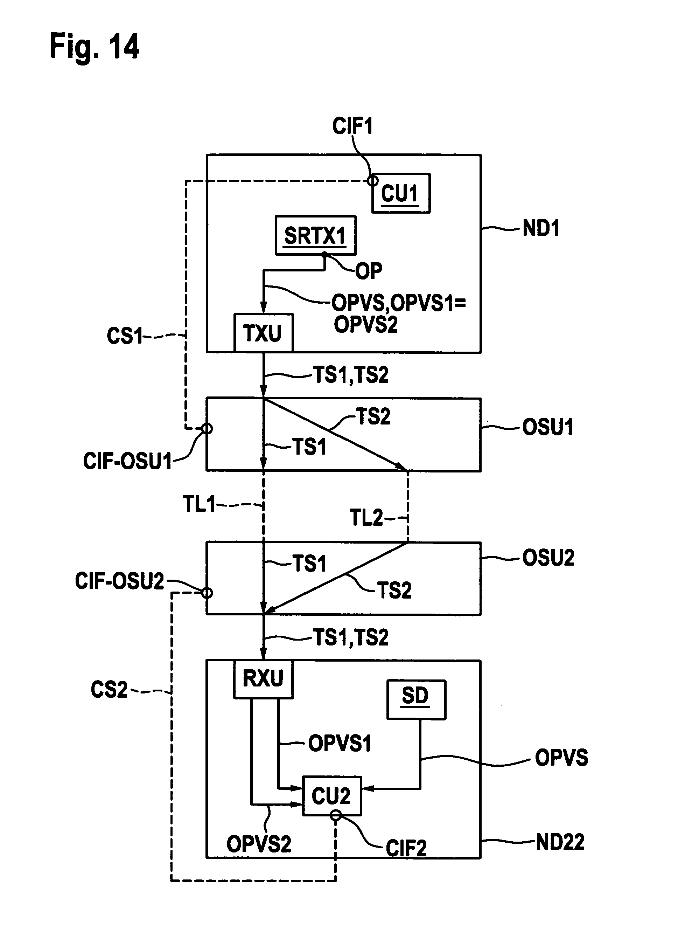

Figure 14 shows devices ND1, ND22 for determining a difference between transmission delays according to a third embodiment.

The device ND1 contains all elements as previously described with respect to the Figure 5. The transmission unit TXU generates a transmission signal TS1 for transmitting first consecutive values OPVS1, as well as a transmission signal TS2 for transmitting second consecutive values OPVS2, which are equal to the first consecutive values OPVS1. The transmission unit TXU generates the transmission signals TS1, TS2 simultaneously, such that the consecutive values OPVS1, OPVS2 are transmitted simultaneously into the transmission lines TL1, TL2. The transmission unit TXU generates the transmission signals TS1, TS2 at different signal wave lengths. Furthermore, the control unit CU1 configures the optical switching unit OSU1, such that the transmission signal TS1 is transmitted from the transmission unit TXU into the transmission line TL1, and such that the transmission signal TS2 is transmitted into the transmission line TL2.

On the receiving side, a device ND22 receives the transmission signals TS1, TS2 from the transmission lines TL1, TL2. For doing so, the control unit CU2 of the device ND22 configures the optical switching unit OSU2, such that it transmits the transmission signal TS1 from the transmission line TL1 to the reception unit RXU, as well as the transmission signal TS2 from the transmission line TL2 to the reception unit RXU.

The reception unit RXU receives the transmission signals TS1, TS2 on different signal wave lengths, and recovers from the received signals TS1, TS2 subsets of the transmitted consecutive values OPVS1, OPVS2. The reception unit RXU provides these subsets of the consecutive values OPVS1, OPVS2 to the control unit CU2.

The device ND22 determines the difference between the transmission delays of the transmission lines TL1, TL2, using the simultaneously received subsets of the consecutive values OPVS1, OPVS2. Two alternative ways for determining the delay difference using the subsets are proposed, and will be described in detail now on.

A first solution for determining the difference between the transmission delays of the transmission lines TL1, TL2, using the simultaneously received subsets, is to correlate the first subset with the second subset, for obtaining a cross correlation function. Preferably, the length of the received subsets is close to the length of the output value sequence generated by the shift register SRTX1, which is $2^N-1$, with N being the length of the shift register SRTX1. The difference between the transmission delays is then determined using the obtained cross correlation function. For determining the cross correlation function, successive values of the received subsets are used, which have been received at same time instances at the reception unit RXU. The difference between the transmission delays is determined, using that index of the cross correlation function, for which the cross correlation function takes on its maximum value. Assuming that this index is the index w, then the difference between the transmission delays is determined as

$$\Delta\tau = w \cdot cr,$$

wherein cr is the clock rate, at which the shift register SRTX1 is operated. This clock rate cr can either be provided at the device ND22, or recovered by the reception unit RXU from the transmission signals TS1, TS2.

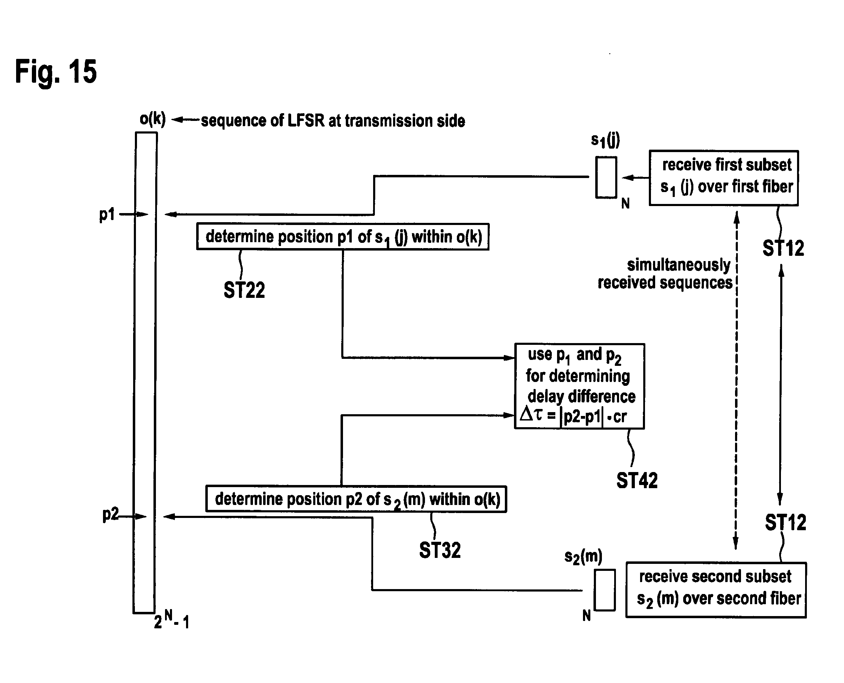

Figure 15 shows a second solution for determining the difference between the transmission delays, as carried out by the control unit CU2 of the device ND22 shown in Figure 14. Preferably, the device ND22 of Figure 14 contains furthermore a storage device SD, which provides the sequence of output values OPVS, as generated by the shift register SRTX1 of the device ND1.

Coming back to Figure 15, the sequence o(k) of the linear feedback shift register at the transmission side is provided. Within a step ST12, a first subset of values $s_1(j)$ is received over the first transmission line, and simultaneously, a second subset of values $s_2(m)$ is received over the second transmission line. In other words, the time instances, at which the values of the subset $s_1(i)$ are received, are the same time instances, at which the values of the subset $s_2(m)$ are received. Each of the subsets $s_1(i)$, $s_2(m)$ is of the length N, equal to the length of the shift register, that generated the sequence $o(k)$ on the transmission side.

Within a step ST22, a position p1 is determined within the sequence $o(k)$, as that position, for which the N following values of the sequence $o(k)$ are equal to the N values of the first subset $s_1(i)$.

Furthermore, within a step ST32, a position p2 is determined in a similar way, using the second subset $s_2(m)$ and the sequence $o(k)$.

Within a step ST42, the delay difference is determined using the determined positions p1 and p2. The delay difference $\Delta t$ is determined as

$$\Delta \tau = |p2 - p1| cr.$$

The value cr is the clock rate, at which the shift register on the transmission side generated the sequence $o(k)$. This clock rate cr may the be provided or alternatively recovered from the transmission signals received at the reception unit.

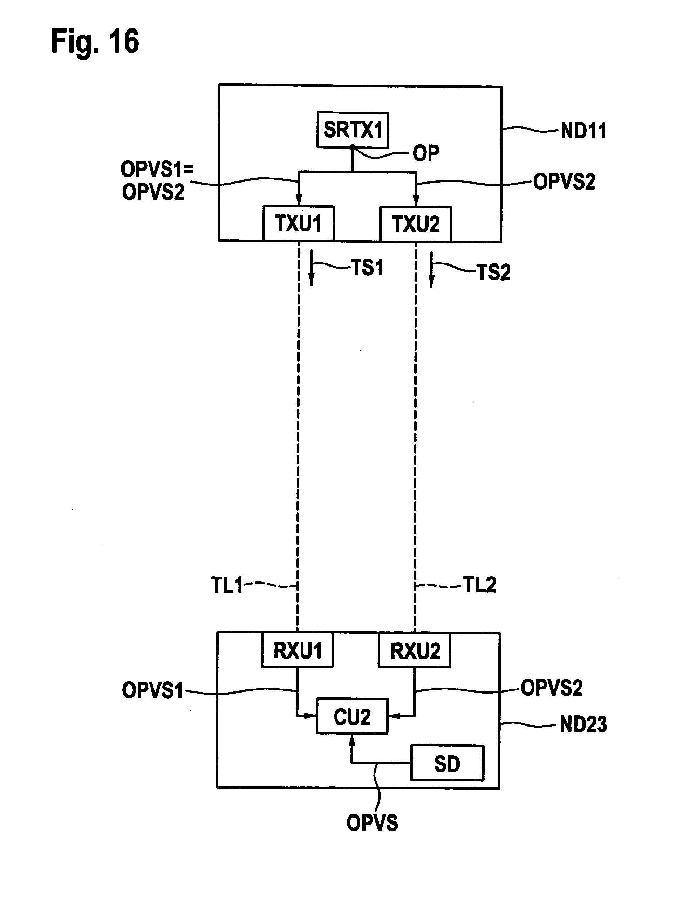

Figure 16 shows alternative solutions for a transmitting device ND11 and a reception device ND23, for carrying out the methods previously described with respect to the Figures 14 and 15.

Figure 16 shows the device ND11, which contains a shift register SRTX1, as previously described with respect to the Figure1. Furthermore, the device ND11 contains two transmission units TXU1, TXU2, which receive from the shift register SRTX1 the consecutive values OPVS1, OPVS2 that are to be transmitted into the transmission lines TL1, TL2. The consecutive values OPVS1 transmitted by the transmission unit TXU1 into the transmission line TL1 are equal to the consecutive values OPVS2 transmitted by the transmission unit TXU2 into the transmission line TL2. Thus, the transmission units TXU1 and TXU2 transmit the same consecutive values OPVS1, OPVS2 simultaneously into the transmission lines TL1, TL2.

The transmission unit TXU1 generates the transmission signal TS1 for transmitting the consecutive values OPVS1 into the transmission line TL1. Furthermore, the transmission unit TXU2 generates the transmission signal TS2 and transmits the signal TS2 into the transmission line TL2 for transmitting the consecutive values OPVS2 into the transmission line TL2.

On the receiving side, the device ND23 contains a reception unit RXU1 that is connected to the transmission line TL1, as well as a reception unit RXU that is connected to the transmission line TL2.

The reception units RXU1, RXU2 provide a first subset of the received consecutive values OPVS1 and a second subset of the received consecutive values OPVS2. The control unit CU2 uses the first and the second subset, for determining the difference between the transmission delays, as it has been described previously with respect to the Figures 14 and 15. The control unit CU2 uses for this determination received subsets of the consecutive values OPVS1, OPVS2, that have been received simultaneously during same time instances. Furthermore, the device ND23 contains preferably a storage device SD, which provides to the control unit CU2 the sequence of output values OPVS as generated by the transmission shift register SRTX1.

## Fourth embodiment

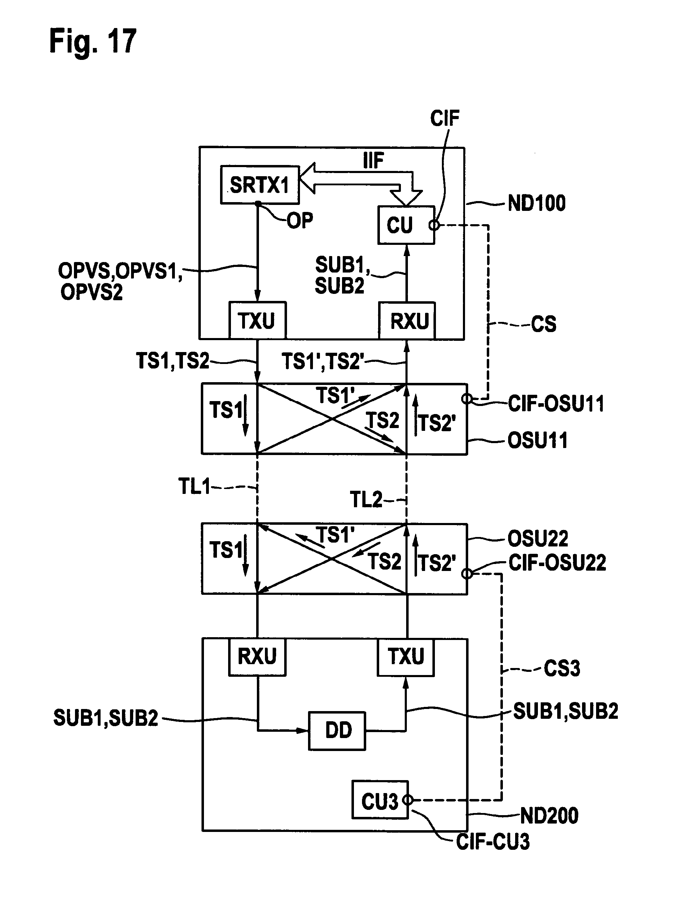

Figure 17 shows devices ND100, ND200, for determining a difference of transmission delays of transmission lines TL1, TL2 according to a fourth embodiment.

The device ND100 contains a shift register SRTX1, as previously described with respect to the Figure 1. The shift register SRTX1 provides at its output OP a sequence of output values OPVS, which itself contains consecutive values OPVS1, OPVS2. The device ND100 contains a transmission unit TXU, which generates a transmission signal TS1 for transmitting the consecutive values OPVS1 into the transmission line TL1. Furthermore, the device ND1 00 contains a control unit CU, which provides at its interface CIF a control signal CS, for controlling an optical switching unit OSU11 via its control interface CIF-OSU11.

The control device CU controls the configuration of the optical switching unit OSU11, such that in this first configuration state the transmission signal TS1 is transmitted from the transmission TXU1 into the transmission line TL1.

On the receiving side, the device ND200 receives the transmission signal TS1 via its reception unit RXU from the transmission line TL1. For doing so, a control unit CU3, which is part of the device ND200, controls a configuration of an optical switching unit OSU22. The control unit CU3 provides at its control interface CIF-CU3 a control signal CS3, for controlling the optical switching unit OSU22 via its control interface CIF-OSU22. The control unit CU3 controls the configuration of the optical switching unit OSU22, such that the transmission signal TS1 is received at the reception unit RXU from transmission line TL1. The reception unit RXU recovers from the received transmission signal TS1 at least a subset SUB1 of the consecutive values OPVS1. The recovered and received subset SUB1 of successive values is delayed by a delay device DD by a first time interval. The delay device DD is preferably a storage element, in which the subset SUB1 is stored and read out at a later point of time.

While the subset SUB1 is delayed by the delay device DD, the control unit CU of the device ND100 changes the configuration of the optical switching unit OSU11, such that the transmission line TL1 is connected with a reception unit RXU of the device ND100.

Then, the subset SUB1 is provided by the delay device DD through the transmission unit TXU of the device ND200 before transmitting the subset SUB11 in the form of the transmission signal TS1' back from the device ND200 to the device ND100. The control CU3 of the device ND200 configures the optical switching unit OSU22, such that the transmission unit TXU of the device ND200 is connected with the transmission line TL1. Then, the transmission unit TXU transmits the subset SUB1 in form of the transmission signal TS1' into the transmission line TL1.

At the optical switching unit OSU11, the transmission signal TS1' is transmitted from the transmission line TL1 to the reception unit RXU of the device ND100. Thus, at the reception unit RXU of the device ND100, the transmission signal TS1' containing the subset SUB1 is received from the transmission line TL1. This subset SUB1 is provided to the control unit CU.

The control unit CU is furthermore connected to the shift register SRTX1 via an internal interface IIF. Via this internal interface IIF, the control unit CU determines a state of the shift register SRTX1, and compares this state to the received subset SUB1. Preferably, this state of the shift register SRTX1 is given by a sequence of N values, wherein N is the number of storage elements of the shift register SRTX1, and wherein the length of the subset SUB1 is also of the length N. By comparing the determined state with the received subset SUB1, the control unit CU is able to determine the delay of the first transmission line TL1, as it has been described previously with respect to the Figure 2, using the first time interval. The delay difference is determined, such that the first time interval is removed from the overall delay time, by which the values of the first subset have been delayed between the transmission by the device ND100 and the reception by this same device ND100. Preferably, the first time interval is a value provided to the control unit by a storage device.

At a later point of time, the transmission unit TXU generates the transmission signal TS2, for transmitting the consecutive values OPVS2 into the transmission line TL2. For doing so, the control unit CU controls the configuration of the optical switching unit OSU11, such that the transmission unit TXU transmits the consecutive values OPVS in the form of the transmission signal TS2 into the transmission line TL2. Furthermore, the control unit CU3 has configured the configuration of the optical switching unit OSU22, such that the transmission line TL2 is connected with the reception unit RXU of the device ND200.

At the device ND200, the reception unit RXU receives the transmission signal TS2 containing the consecutive values OPVS2 from the transmission line TL2. The reception unit RXU recovers at least a subset SUB2 of these consecutive values OPVS2. The subset SUB2 is then delayed by the delay device DD by a second time interval.

Meanwhile, the control unit CU3 configures the optical switching unit OSU22, such that the transmission unit TXU of the device ND200 is connected with the transmission line TL2. Furthermore, meanwhile, the control unit CU configures the configuration of the optical switching unit OSU1 1, such that the transmission line TL2 is connected with the reception unit RXU of the device ND100.

The transmission unit TXU transmits the subset SUB2 into the transmission line TL2, by generating a transmission signal TS2', which contains the subset SUB2. This transmission signal TS2' is received at the reception unit RXU of the device ND100. From this transmission signal TS2', the reception unit RXU recovers the subset SUB2, and provides this subset SUB2 to the control unit.

The control unit determines a state of the shift register SRTX1, upon the reception of the subset SUB2. By comparing the determined state with the received subset SUB2, the control unit CU is able to determine the delay of the first transmission line TL2, as it has been described previously with respect to the Figure 2, using the first time interval. The delay difference is determined, such that the second time interval is removed from the overall delay time, by which the values of the second subset have been delayed between the transmission by the device ND100 and the reception by this same device ND100. Preferably, the second time interval is a value provided to the control unit by a storage device.

To summarize the above, for determining the transmission delays of the transmission lines TL1, TL2, the control unit CU2 takes into account the time intervals, by which the subsets SUB1, SUB2 are delayed by the delay device DD. These time intervals are provided to the control unit CU by a storage device of the device ND1 00, not shown in the Figure 17.

Preferably, in the case that the time intervals, by which the subsets SUB1, SUB2 are delayed by the delay device DD, are equal, the determination of the difference of the transmission delays of the transmission lines TL1, TL2 may be carried out, without taking into account this time interval, since this time interval would affect both subsets SUB1, SUB2 in the same way.

The device ND100 determines the difference of the transmission delays, by subtracting the determined transmission delays of the transmission lines TL1, TL2.

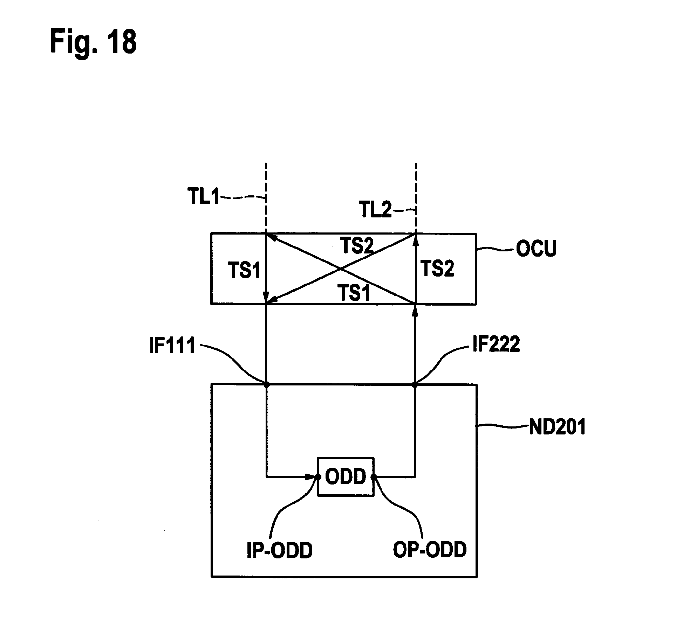

Figure 18 shows a device ND201 and an optical coupling unit OCU, which are an alternative solution to the device ND200 and the optical switching unit OSU22 shown in Figure 17.

The optical coupling unit OCU couples the transmission line TL1 with an input IP-ODD of an optical delay device ODD, which is part of the device ND201. Furthermore, the optical coupling unit OCU couples the transmission line TL2 with the input IP-ODD.

Furthermore, the optical coupling unit OCU couples an output OP-ODD of the optical delay device ODD with the transmission line TL1 and the transmission line TL2.

At the device ND201, a reception unit RXU is given in the form of an interface IF111, which connects the optical coupling unit OCU with the input IP-ODD of the optical delay device ODD. Furthermore, a transmission unit TXU is given in the form of an interface IF222, which connects the output OP-ODD of the optical delay device ODD with the optical coupling unit OCU.

**Fifth embodiment**

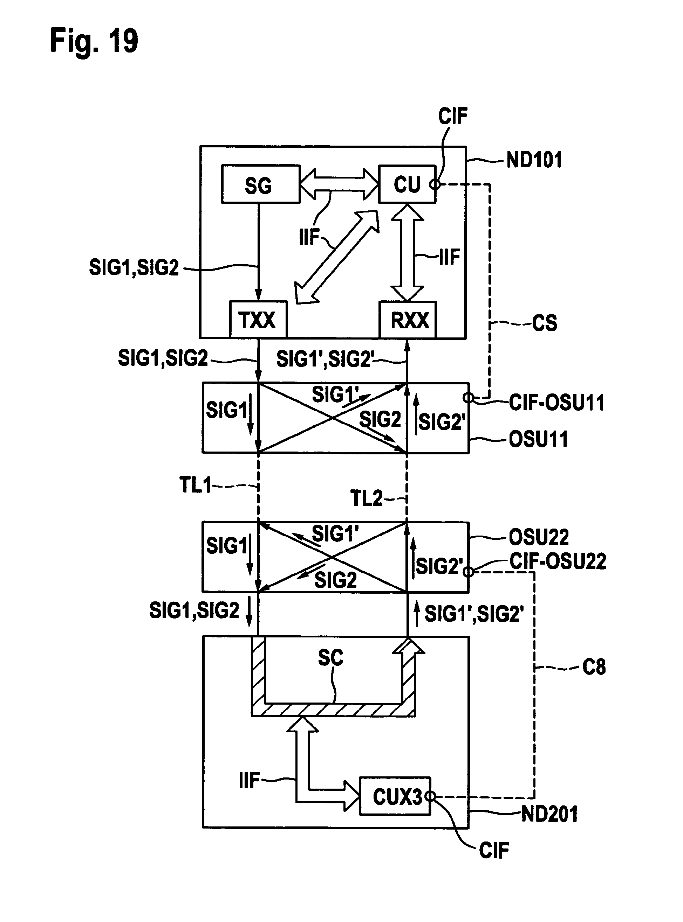

The fifth embodiment is described with respect to the Figure 19.

Figure 19 shows a device ND101, similar to the device ND100 of Figure 17, optical switching units OSU11, OSU22, as shown in Figure 17, and a device ND201, similar to the device ND200 of Figure 17.

The device ND101 contains a signal generator SG, that generates two signals SG1, SG2. A transmission device TXX transmits the first signal SIG1 into the first transmission line T1. The control unit CU of the device ND101 configures for this transmission the optical switching unit OSU11, as previously described with respect to Figure 17.

The device ND201 receives the signal SG1. For this reception, the control unit CU3 of the device ND201 configures the optical switching unit OSU22 as previously described with respect to Figure 17.

The device transmits at least a part SIG1' of the signal SIG1 into the second transmission line TL. For this transmission, the control unit CU3 of the device ND201 configures the optical switching unit OSU22 as previously described with respect to Figure 17. Preferably, the device ND201 contains a signal coupler SC for carrying out this transmission.

The device ND101 receives the signal part SIG1' at its reception unit RXX. For this reception, the control unit CU of the device ND211 configures the optical switching unit OSU111 as previously described with respect to Figure 17.

The control unit CU is connected to the signal generator SG, the reception unit RXX and the transmission unit TXX. The control unit CU determines the time interval, which the signal part SIG1' takes for propagating from the transmitter TXX to the device ND201 and back to the receiver RXX, twice along the transmission line TL1. The control unit CU determines the transmission delay of the transmission line TL1 as half the determined time interval.

In a similar way as the above described way for determining the transmission delay of the transmission line TL2, the devices ND101 and ND201 carry out respective steps, for determining the transmission delay of the transmission line TL2, using the signals SIG2 and the signal part SIG2'. For this, the devices ND101 and ND202 configure the optical switching units OSU11 and OSU22, as previously described with respect to Figure 17.

The difference of the transmission delays is then determined as the difference of the determined transmission delay of the transmission line TL1 and the determined transmission delay of the transmission line TL2.

Preferably, the signals SIG1, SIG2 are signal pulses of a limited time duration. Preferably, the signals SIG1, SIG2 are Gaussian pulses.

**Sixth Embodiment**

In the sixth embodiment, a network node is proposed. The network node contains at least one transmission unit that is connectable to a first optical transmission line, and at least one reception unit that is connectable to a second transmission line. The network node contains furthermore a control unit, that controls the transmission unit and the reception unit. The control unit configures the transmission unit to transmit into the first transmission line at least one signal, and configures the reception unit to receive from the second transmission line at least one signal. The control unit is adapted to synchronize the network node to another network node, using the mentioned signals. The control unit uses a predefined difference between the transmission line delays, for synchronizing a clock of the node to the clock of the other network node. This is preferably carried out using also the method of synchronization described in IEEE 802.3. The predefined difference between the transmission line delay is a difference determined by a method of any claim of the claims 1 to 33.

**Summary of the Embodiments**

In all of the first five embodiments, the devices ND1, ND11, ND100, ND 2, ND21, ND22, ND23, ND200, ND201 are preferably network nodes, that are adapted to transmit data in form of an optical data signal.

Furthermore, in the first, the second, the third, and the fourth embodiment, the transmission units TXU are preferably a transmission unit TX as described with reference to Figure 8a.

Furthermore, in the first, the second, the third, and the fourth embodiment, the reception units RXU are preferably a reception unit RX as described with reference to Figure 8b.

Furthermore, in the first, the second, the third, and the fourth embodiment, the device SRTX1 is preferably a device that is adapted to provide a sequence of values equal to an output sequence of a linear feedback shift register. Furthermore, in the first, the second, the third, and the fourth embodiment, the first consecutive values OPVS1 may be equal to the second consecutive values OPVS2.

Furthermore, in the first, the second, the third, and the fourth embodiment, the optical switching units OSU1, OSU2, OSU22, OCU may be given in one of the forms as described with respect to the Figure 7a, 7b or 7b.

Furthermore, in the first, the second, the third, and the fourth embodiment, a clock rate cr used for any step of a method may either be provide or recovered from a received signal as described in the standard IEEE 802.3.

Further aspects of the first five embodiments should be taken into consideration:

In all of the first five embodiments, a method of determining a difference between optical transmission delays is proposed, which contains the steps of

- transmitting a first signal into a first optical transmission line, having a first transmission delay,
- transmitting a second signal into a second optical transmission line, having a second transmission delay,
- receiving at least a part of the first signal from the first optical transmission line,
- receiving at least a part of the second signal from said second optical transmission line, and
- determining a difference between the first transmission delay and the second transmission delay, using the received parts of the signals.

In a further aspect of all of the first five embodiments

the steps of

- transmitting the first signal, and
- transmitting the second signal,

are carried out at a first device,
and the steps of

- receiving the part of the first signal, and
- receiving the part of the second signal,

are carried out at the first device or a second device, different from the first device.

In a further aspect of the first, the second and the third embodiment the steps of

- receiving the part of the first signal, and
- receiving the part of the second signal,

are carried out at the second device.

In a further aspect of the first, the second, the third and the fourth embodiment the first signal is first consecutive values of a random value sequence, the second signal is second consecutive values of the random value sequence, the part of the first signal is at least a first subset of the first consecutive values, and the part of the second signal is at least a second subset of the second consecutive values.

In a further aspect of the first embodiment and the alternative solution of the second embodiment described with respect to Figure 13, at the second device steps of

- providing a linear feedback shift register,
- determining a state of the linear feedback shift register,
- determining the difference between the transmission delays, using the determined state of the linear feedback shift register and the second subset of the second consecutive values

are carried out.

In a further aspect of the first embodiment, the linear feedback shift register provided at the second device is a first reception linear feedback shift register, and at the second device a step of synchronizing the first reception linear feedback shift register to the first subset of the first consecutive values is carried out.

In a further aspect of the first embodiment, at the second device a step of comparing values stored in storage elements of the first reception linear feedback shift register during the determined state with consecutive values of the second subset of the second consecutive values is carried out.

In a further aspect of the first embodiment, at the second device a step of comparing output values generated by the first reception linear feedback shift register with consecutive values of the second subset of the second consecutive values is carried out.

In a further aspect of the first embodiment, the state of the first reception linear feedback shift register is determined at a first time instance, and at the second device, steps of

- providing a second reception linear feedback shift register,
- synchronizing the second reception linear feedback shift register to the subset of the second consecutive values,
- determining a state of the second reception linear feedback shift register at a second time instance,

are carried out, wherein the difference between the transmission delays is determined, using the determined states.

In a further aspect of the first embodiment, the step of synchronizing the first reception linear feedback shift register to the first subset of the first consecutive values contains the sub-steps of

- writing N successive values of the subset of the first consecutive values into the first reception linear feedback shift register, and
- operating the first reception linear feedback shift register at a provided clock rate.

In a further aspect of the first embodiment, the step of synchronizing the second reception linear feedback shift register to the subset of the second consecutive values comprises the sub-steps of

- writing N successive values of the second subset of the second consecutive values into the second reception linear feedback shift register , and
- operating the second reception linear feedback shift register at a provided clock rate.

In a further aspect of the first embodiment, the first time instance is equal to the second time instance.

In a further aspect of the first embodiment, the first time instance is different from the second time instance.

In a further aspect of the first embodiment, the first reception linear feedback shift register is operated at the provided clock rate *cr*, and the determined delay difference is chosen to a value smaller than $(2^N-1).cr/2$.

In an aspect of the alternative solution of the second embodiment, at the second device steps of

- determining a first state of the linear feedback shift register upon reception of the first subset,
- determining a second state of the linear feedback shift register upon reception of the second subset,
- providing the sequence of values provided at the first device,
- providing a second sequence of output values of the linear feedback shift register provided at the second device,
- determining a first index within the sequence of values, using the first subset,
- determining a second index within the sequence of values, using the second subset,
- determining a first index within the second sequence of values, using the determined first state,
- determining a second index within the second sequence of values, using the determined second state,

are carried out, wherein the difference between the transmission delays is determined, using the determined indices.

In an aspect of the second embodiment, at the second device steps of

- providing at least one counter,
- providing the sequence of values equal to output values of a transmission linear feedback shift register,
- determining a first index within the sequence of values, using the first subset,
- determining a second index within the sequence of values, using the second subset,
- determining at least two values of the counter,

are carried out, wherein the difference between the first transmission delay and the second transmission delay is determined using the first index , the second index and the at least two values.

In an aspect of the solution of the second embodiment described with respect to Figure 12, at the second device

steps of

- providing a first counter and a second counter,
- upon reception of the first subset, determining a first value of the first counter,
- upon reception of the second subset, determining a first value of the second counter,
- determining a second value of the first counter and a second value of the second counter at a same time instance,

are carried out, wherein the difference between the first transmission delay and the second transmission delay is determined using the first index , the second index , the first value of the first counter, the first value of the second counter , the second value of the first counter and the second value of the second counter.

In an aspect of the alternative solution of the second embodiment described with respect to Figure 13, the counter is a linear feedback shift register, and at the second device steps of

- upon reception of the first subset , determining a first value of the counter ,
- upon reception of the second subset, determining a second value of the counter,

are carried out, wherein the difference between the first transmission delay and the second transmission delay is determined using the first index, the second index , the first value of the counter and the second value of the counter.

In a further aspect of the first four embodiments, the first consecutive values are transmitted, using a first optical transmission signal, the second consecutive values are transmitted, using a second optical transmission signal, data values are transmitted over the first optical transmission line, using an optical data signal, and the optical data signal has a bandwidth range, which is disjoint to the bandwidth ranges the first optical transmission signal and the second optical transmission signal.

In an aspect of the third embodiment, the values of the first subset are received at first successive time instances, and the values of the second subset are received at second successive time instances equal to the first successive time instances.

In a further aspect of the first solution of the third embodiment, at the second device a step of

- determining a cross correlation function, by correlating successive values of the received first subset with successive values of the received second subset,

is carried out, and the difference between the first transmission delay and the second transmission delay is determined using the cross correlation function.

In a further aspect of the first solution of the third embodiment, the difference between the first transmission delay and the second transmission delay is determined using that index, at which the cross correlation function takes its maximum value.

In a further aspect of the second solution of the third embodiment described with respect to Figure 15, at the second device steps of

- providing the sequence of values equal to output values of a transmission linear feedback shift register,
- determining a first index within the sequence of values, using the first subset,
- determining a second index within the sequence of values, using the second subset,

are carried out, and the difference between the first transmission delay and the second transmission delay is determined using the first index and the second index.

In a further aspect of the second solution of the third embodiment described with respect to Figure 15, the first subset is of length N, the second subset is of length N, the first index is determined by comparing the first subset with N values of the sequence of values , and the second index is determined by comparing the second subset with at least M values of the sequence of values. In a further aspect of the second solution of the third embodiment described with respect to Figure 15, the first index is determined using those indices, for which the values of the sequence of values are equal to the values of the first subset, and the second index is determined using those indices, for which the values of the sequence of values are equal to the values of the second subset.

In a further aspect of the first four embodiments, at the second device a clock rate $cr$ is provided, and the sequence of values has a sequence length $2^N -1$, and the determined delay difference is chosen to a value smaller than $(2^N -1).cr/2$.

In a further aspect of the fourth and the fifth embodiment,
the steps of

- transmitting the first signal,
- transmitting the second signal,
- receiving the part of the first signal, and
- receiving the part of the second signal,

are carried out at a first device,
while at a second device steps of

- receiving at least the part of the first signal from the first optical transmission line,
- transmitting at least the part of the first signal into the first optical transmission line,
- receiving at least the part of the second signal from the second optical transmission line,
- transmitting at least the part of the second signal into the second optical transmission line,

are carried out.

In a further aspect of the fourth embodiment, at the second device steps of

- delaying the part of the first signal by a first predefined time delay,
- delaying the part of the second signals by a second predefined time delay

are carried out.

In a further aspect of the fourth embodiment, the first predefined time delay is different from the second predefined time delay, and the difference between the transmission delays is determined, using the predefined time delays.

In a further aspect of the fourth embodiment, the parts of the signals are delayed, by writing the parts of the signals into at least one storage device and reading the parts of the signals out from the storage device after respective time intervals.

In a further aspect of the fourth embodiment, the parts of the signals are delayed, using at least one optical delay line.

In a further aspect of the first four embodiments, the random value sequence is a pseudo random value sequence.

In a further aspect of the first four embodiments, the pseudo random value sequence is a sequence of values equal to output values of a transmission linear feedback shift register.

In a further aspect of the first four embodiments, an optical device, contains

- a device, adapted to provide a random number sequence, and
- at least one transmission unit, adapted

  - to transmit first consecutive values of the random number sequence into a first optical transmission line having a first transmission delay,
  - to transmit second consecutive values of the random number sequence into a second optical transmission line having a second transmission delay.

In a further aspect of the first four embodiments, the optical device contains a control unit, adapted to control a configuration of an optical switching unit, which is configurable to connect the transmission unit with the first transmission line and/or the second transmission line.

In a further aspect of the first and the second embodiment, the optical device contains at least one reception unit, adapted

- to receive a first set of consecutive values from a first optical transmission line having a first transmission delay, and

- to receive a second set of consecutive values from a second optical transmission line having a second transmission delay,

and at least one linear feedback shift register , and a control unit, adapted

- to determine a state of the first reception linear feedback shift register, and
- to determine a difference between the transmission delays, using the determined state of the first reception linear feedback shift register and the subset of the second consecutive values.

In a further aspect of the first embodiment, the control unit is furthermore adapted to synchronize the first reception linear feedback shift register to the first subset.

In a further aspect of the first embodiment, the optical device contains furthermore a second linear feedback shift register, and the control unit is adapted

- to synchronize the second reception linear feedback shift register to the second subset,
- to determine a state of the second reception linear feedback shift register, and
- to determine the difference between the transmission delays, using the determined states of the reception linear feedback shift registers.

In a further aspect of the second embodiment, the optical device contains at least one reception unit, adapted

- to receive a first set of consecutive values from a first optical transmission line having a first transmission delay, and
- to receive a second set of consecutive values from a second optical transmission line having a second transmission delay,

and a storage device adapted to provide a random number sequence, and at least one control unit, adapted

- to provide at least one counter,
- to determine a first index within the random number sequence, using the first set,
- to determine a second index within the random number sequence, using the second set,
- to determine at least two values of the counter, and
- to determine a difference between the transmission delays using the first index, the second index and the at least two values.

In a further aspect of the second embodiment, the control unit is adapted

- to provide a first counter and a second counter,

- to determine a first value of the first counter upon reception of the first set,
- to determine a first value of the second counter upon reception of the second set,
- to determine a second value of the first counter and a second value of the second counter at a same time instance, and
- to determine the difference between the transmission delays, using the first index, the second index, the first value of the first counter, the first value of the second counter, the second value of the first counter and the second value of the second counter.

In a further aspect of the alternative solution of the second embodiment, the control unit is adapted

- to provide the counter in the form of a linear feedback shift register,
- to determine a first value of the counter upon reception of the first set,
- to determine a second value of the counter upon reception of the second set, and
- to determine the difference between transmission delays, using the first index, the second index, the first value of the counter and the second value of the counter.

In a further aspect of the third embodiment, the first consecutive values are equal to the second consecutive values, and the transmission unit is adapted to transmit the consecutive values simultaneously into the transmission lines.

In a further aspect of the third embodiment, the transmission unit is adapted

- to transmit the first consecutive values at a first signal wavelength, and
- to transmit the second consecutive values at a second signal wavelength,

and the optical device contains a control unit, adapted to control a configuration of an optical switching unit, which is configurable to connect

- the transmission unit with the first transmission line at the first signal wavelength, and
- the transmission unit with the second transmission line at the second transmission wavelength.

In a further aspect of the third embodiment, the optical device contains at least one reception unit, adapted to receive simultaneously

- a first set of consecutive values from a first optical transmission line having a first transmission delay, and
- a second set of consecutive values from a second optical transmission line having a second transmission delay,

comprising furthermore a control unit, adapted determine the difference between the transmission delays using the sets of consecutive values.

In a further aspect of the third embodiment, the control unit is furthermore adapted

- to determine a cross correlation function using the sets of consecutive values, and
- to determine the difference between the transmission delays using the cross correlation function.

In a further aspect of the third embodiment, the optical device contains furthermore a storage device adapted to provide a sequence of values, wherein the control unit is furthermore adapted

- to determine a first index within the sequence of values, using the first set,
- to determine a second index within the sequence of values, using the second set, and
- to determine the difference between the transmission delays using the first index and the second index.

In a further aspect of the fourth and the fifth embodiment, an optical device contains

- a device, adapted to provide a first signal and a second signal,
- at least one transmission unit, adapted

  - to transmit the first signal into a first optical transmission line having a first transmission delay,
  - to transmit the second signal into a second optical transmission line having a second transmission delay,

  and furthermore at least one reception unit, adapted

  - to receive at least a part of the first signal from the first optical transmission line, and
  - to receive at least a part of the second signal from the second optical transmission line,

and furthermore a control unit, adapted

- to control a configuration of an optical switching unit, which is configurable to connect

  - the transmission unit with the first transmission line and/or the second transmission line, and
  - the reception unit with the first transmission line and/or the second transmission line, and
  - to determine a difference between the transmission delays, using the received parts of signals.

In a further aspect of the fourth embodiment, the signals are consecutive values of a random number sequence, and the parts of signals are subsets of the consecutive values, the device adapted to provide the random number sequence is a linear feedback shift register, and the control unit is adapted

- to determine a first state of the linear feedback shift register upon reception of a first subset ,
- to determine a second state of the linear feedback shift register upon reception of a second subset, and

the difference between the transmission delays is determined, using the received subsets and the determined states.

In a further aspect of the fourth and the fifth embodiment, an optical device contains at least one reception unit, adapted

- to receive a first signal from the first optical transmission line,
- to receive a second signal from the second optical transmission line, and contains furthermore at least one transmission unit, adapted
- to transmit the first signal into the first optical transmission line,
- to transmit the second signal into the second optical transmission line, and contains furthermore a control unit, adapted to control a configuration of an optical switching unit, which is configurable to connect
- the reception unit with the first transmission line and/or the second transmission line, and
- the transmission unit with the first transmission line and/or the second transmission line.

In a further aspect of the fourth embodiment, the optical device contains furthermore at least one delay device, adapted

- to delay the received first signal by a first predefined time interval,
- to delay the received second signal by a second predefined time interval,

before transmitting the transmission unit transmits the signals.

Furthermore, the different devices interacting in the different embodiments form systems for determining a difference between the optical transmission delays.

The present invention may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

A person of skill in the art would readily recognize that steps of various above-described methods can be performed by programmed processors. Herein, some embodiments are also intended to cover program storage devices, e.g., digital data storage media, which are machine or computer readable and encode machine-executable or computer-executable programs of instructions, wherein the instructions perform some or all of the steps of the above-described methods. The program storage devices may be, e.g., digital memories, magnetic storage media such as a magnetic disks and magnetic tapes, hard drives, or optically readable digital data storage media. The embodiments are also intended to cover computers programmed to perform part of the above-described methods.

The functions of the various elements shown in the Figures 1 to 8, including any functional blocks labelled as "control unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "control unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

**Claims**

1. Method of determining a difference between optical transmission delays, comprising, at a first device (ND1),

   - providing a sequence of values equal to an output sequence of a linear feedback shift register,
   - transmitting first consecutive values (OPVS1) of said sequence (OPVS) into a first optical transmission line (TL1), having a first transmission delay ($TD$1),
   - transmitting second consecutive values (OPVS1) of said sequence (OPVS) into a second optical transmission line (TL2), having a second transmission delay ($TD$2),
   comprising furthermore, at a second device (ND2),
   - receiving at least a subset of said first consecutive values (OPVS1) from said first optical transmission line (TL1),
   - providing a linear feedback shift register (SRRX1)

   - synchronizing said linear feedback shift register (SRRX1) to said subset of said first consecutive values (OPVS1),
   - operating said shift register (SRRX1) at a clock-rate that is either provided as a predetermined clock rate or that is recovered from said received subset of said first consecutive values ,
   - receiving at least a subset of said second consecutive values (OPVS2) from said second optical transmission line (TL2),
   - determining a state of said linear feedback shift register (SRRX1),
   - determining a difference between said first transmission delay ($TD$1) and said second transmission delay ($TD$2), using said determined state, said subset of said second consecutive values and said clock rate.

2. Optical device (ND1),
   comprising

   - a device (SRTX1), adapted to provide a sequence of values equal to an output sequence of a linear feedback shift register and
   - at least one transmission unit (TXU), adapted

     - to transmit first consecutive values (OPVS1) of said random number sequence (OPVS) into a first optical transmission line (TL1) having a first transmission delay ($TD$1),
     - to transmit second consecutive values (OPVS2) of said random number sequence (OPVS) into a second optical transmission line (TL2) having a second transmission delay ($TD$2).

3. Optical device (ND2),
   comprising at least one reception unit (RXU), adapted

   - to receive a first set of consecutive values (OPVS1) from a first optical transmission line (TL1) having a first transmission delay ($TD$1), and
   - to receive a second set of consecutive values (OPVS2, $s_2(m)$) from a second optical transmission line (TL2) having a second transmission delay ($TD$2),

   comprising furthermore at least one linear feedback shift register (SRRX1, LLFSR),
   wherein said optical device (ND2) is furthermore adapted

   - to synchronize said linear feedback shift register (SRRX1) to said subset of said first consecutive values (OPVS1),

- and to operate said shift register (SRRX1) at a clockrate that is either provided as a predetermined clock rate or that is recovered from said received subset of said first consecutive values using a clock data recovery circuit,

comprising furthermore a control unit (CU2), adapted

- to determine a state of said linear feedback shift register (SRRX1, LLFSR), and
- to determine a difference between said transmission delays, using said determined state of said first reception linear feedback shift register (SRRX1, LLFSR), said subset of said second consecutive values (OPVS2) and said clock rate.

**Patentansprüche**

1. Verfahren zur Ermittlung einer Differenz zwischen optischen Übertrag ungsverzögerungen, umfassend, an einer ersten Vorrichtung (ND1),

   - Bereitstellen einer Sequenz von Werten, welche gleich einer Ausgangssequenz eines linear rückgekoppelten Schieberegisters sind,
   - Übertragen von ersten aufeinanderfolgenden Werten (OPVS1) der besagten Sequenz (OPVS) in eine erste optische Übertragungsleitung (TL1) mit einer ersten Übertragungsverzögerung (TD1),
   - Übertragen von zweiten aufeinanderfolgenden Werten (OPVS2) der besagten Sequenz (OPVS) in eine zweite optische Übertragungsleitung (TL2) mit einer zweiten Übertragungsverzögerung (TD2),

   weiterhin umfassend, an einer zweiten Vorrichtung (ND2),

   - Empfangen mindestens eines Teilsatzes der besagten ersten aufeinanderfolgenden Werte (OPVS1) von der besagten ersten optischen Übertragungsleitung (TL1),
   - Bereitstellen eines linear rückgekoppelten Schieberegisters (SRRX1),
   - Synchronisieren des besagten linear rückgekoppelten Schieberegisters (SRRX1) mit dem besagten Teilsatz der besagten ersten aufeinanderfolgenden Werte (OPSV1),
   - Betreiben des besagten Schieberegisters (SRRX1) mit einer Taktrate, welche entweder als eine vorbestimmte Taktrate bereitgestellt oder aus dem besagten empfangenen Teilsatz der besagten ersten aufeinanderfolgenden Werte rückgewonnen wird,

   - Empfangen mindestens eines Teilsatzes der besagten zweiten aufeinanderfolgenden Werte (OPVS2) von der besagten zweiten optischen Übertragungsleitung (TL2),
   - Ermitteln eines Zustands des besagten linear rückgekoppelten Schieberegisters (SRRX1),
   - Ermitteln einer Differenz zwischen der besagten ersten Übertragungsverzögerung (TD1) und der besagten zweiten Übertragungsverzögerung (TD2) unter Verwendung des ermittelten Zustands, des besagten Teilsatzes der besagten zweiten aufeinanderfolgenden Werte und der besagten Taktrate.

2. Optische Vorrichtung (ND1), umfassend:

   - Eine Vorrichtung (SRTX1), ausgelegt für das Bereitstellen einer Sequenz von Werten, welche gleich einer Ausgangssequenz eines linear rückgekoppelten Schieberegisters sind, und
   - mindestens eine Übertragungseinheit (TXU), ausgelegt

     - für das Übertragen von ersten aufeinanderfolgenden Werten (OPVS1) der besagten Zufallszahlensequenz (OPVS) in eine erste optische Übertragungsleitung (TL1) mit einer ersten Übertragungsverzögerung (TD1),
     - für das Übertragen von zweiten aufeinanderfolgenden Werten (OPVS2) der besagten Zufallszahlensequenz (OPVS) in eine zweite optische Übertragungsleitung (TL2) mit einer zweiten Übertragungsverzögerung (TD2).

3. Optische Vorrichtung (ND2), umfassend mindestens eine Empfangseinheit (RXU), welche ausgelegt ist für

   - den Empfang eines ersten Satzes von aufeinanderfolgenden Werten (OPVS1) von einer ersten optischen Übertragungsleitung (TL1) mit einer ersten Übertragungsverzögerung (TD1), und
   - den Empfang eines zweiten Satzes von aufeinanderfolgenden Werten (OPVS2, $s_2(m)$) von einer zweiten optischen Übertragungsleitung (TL2) mit einer zweiten Übertragungsverzögerung (TD2),

   weiterhin umfassend mindestens ein linear rückgekoppeltes Schieberegister (SRRX1, LLFSR), wobei die besagte optische Vorrichtung (ND2) weiterhin ausgelegt ist für

   - das Synchronisieren des besagten linear rückgekoppelten Schieberegisters (SRRX1) mit dem besagten Teilsatz der besagten ersten aufeinanderfolgenden Werte (OPVS1),

- und das Betreiben des besagten Schieberegisters (SRRX1) mit einer Taktrate, welche entweder als eine vorbestimmte Taktrate bereitgestellt oder aus dem besagten empfangenen Teilsatz der besagten ersten aufeinanderfolgenden Werte unter Verwendung einer Taktdatenrückgewinnungsschaltung rückgewonnen wird,

weiterhin umfassend eine Steuereinheit (CU2), ausgelegt für

- das Ermitteln eines Zustands des besagten linear rückgekoppelten Schieberegisters (SRRX1, LLFSR), und
- das Ermitteln einer Differenz zwischen den besagten Übertragungsverzögerungen unter Verwendung des besagten ermittelten Zustands des besagten ersten linear rückgekoppelten Empfangsschieberegisters (SRRX1, LLFSR), des besagten Teilsatzes der besagten zweiten aufeinanderfolgenden Werte (OPVS2) und der besagten Taktrate.

**Revendications**

1. Procédé de détermination d'une différence entre des retards de transmission optique, comprenant, au niveau d'un premier dispositif (ND1), les étapes suivantes

- fournir une séquence de valeurs égale à une séquence de sortie d'un registre à décalage à rétroaction linéaire,
- transmettre des premières valeurs consécutives (OPVS1) de ladite séquence (OPVS) dans une première ligne de transmission optique (TL1), ayant un premier retard de transmission ($TD$1),
- transmettre des deuxièmes valeurs consécutives (OPVS2) de ladite séquence (OPVS) dans une deuxième ligne de transmission optique (TL2), ayant un deuxième retard de transmission ($TD$2),

comprenant en outre, au niveau d'un deuxième dispositif (ND2), les étapes suivantes

- recevoir au moins un sous-ensemble desdites premières valeurs consécutives (OPVS1) à partir de ladite première ligne de transmission optique (TL1),
- fournir un registre à décalage à rétroaction linéaire (SRRX1)
- synchroniser ledit registre à décalage à rétroaction linéaire (SRRX1) avec ledit sous-ensemble desdites premières valeurs consécutives (OPVS1),

- faire fonctionner ledit registre à décalage (SRRX1) à une fréquence d'horloge qui est fournie sous forme de fréquence d'horloge prédéterminée ou qui est récupérée à partir dudit sous-ensemble reçu desdites premières valeurs consécutives,
- recevoir au moins un sous-ensemble desdites deuxièmes valeurs consécutives (OPVS2) à partir de ladite deuxième ligne de transmission optique (TL2),
- déterminer un état dudit registre à décalage à rétroaction linéaire (SRRX1),
- déterminer une différence entre ledit premier retard de transmission ($TD$1) et ledit deuxième retard de transmission ($TD$2), en utilisant ledit état déterminé, ledit sous-ensemble desdites deuxièmes valeurs consécutives et ladite fréquence d'horloge.

2. Dispositif optique (ND1), comprenant

- un dispositif (SRTX1), adapté pour fournir une séquence de valeurs égale à une séquence de sortie d'un registre à décalage à rétroaction linéaire et
- au moins une unité de transmission (TXU), adaptée

- pour transmettre des premières valeurs consécutives (OPVS1) de ladite suite de nombres aléatoires (OPVS) dans une première ligne de transmission optique (TL1), ayant un premier retard de transmission ($TD$1),
- pour transmettre des deuxièmes valeurs consécutives (OPVS2) de ladite suite de nombres aléatoires (OPVS) dans une deuxième ligne de transmission optique (TL2), ayant un deuxième retard de transmission ($TD$2),

3. Dispositif optique (ND2), comprenant au moins une unité de réception (RXU), adaptée

- pour recevoir un premier ensemble de valeurs consécutives (OPVS1) à partir d'une première ligne de transmission optique (TL1) ayant un premier retard de transmission ($TD$1), et
- pour recevoir un deuxième ensemble de valeurs consécutives (OPVS2, $s_2$(m)) à partir d'une deuxième ligne de transmission optique (TL2) ayant un deuxième retard de transmission ($TD$2),

comprenant en outre au moins un registre à décalage à rétroaction linéaire (SRRX1, LLFSR),
dans lequel ledit dispositif optique (ND2) est en outre adapté

- pour synchroniser ledit registre à décalage à rétroaction linéaire (SRRX1) avec ledit sous-ensemble desdites premières valeurs consécutives (OPVS1),
- et pour faire fonctionner ledit registre à décalage (SRRX1) à une fréquence d'horloge qui est fournie sous forme de fréquence d'horloge prédéterminée ou qui est récupérée à partir dudit sous-ensemble reçu desdites premières valeurs consécutives en utilisant un circuit de récupération de données d'horloge,

comprenant en outre une unité de commande (CU2), adaptée

- pour déterminer un état dudit registre à décalage à rétroaction linéaire (SRRX1, LLFSR), et
- pour déterminer une différence entre lesdits retards de transmission, en utilisant ledit état déterminé dudit premier registre à décalage à rétroaction linéaire de réception (SRRX1, LLFSR), ledit sous-ensemble desdites deuxièmes valeurs consécutives (OPVS2) et ladite fréquence d'horloge.

# Fig. 1

# Fig. 2

## Fig. 3a

OPV     CE

V1   V2   V3   V4

OP

| 1 | 0 | 1 | 1 |

SRTX1

S1   S2   S3   S4

$$x^4 + x^3 + 1$$

## Fig. 3b

GSRTX1

S4'   S3'   S2'   CE   S1'   OPV'    OP'

$$x^4 + x^1 + 1$$

# Fig. 4

# Fig. 5

**Fig. 6**

EP 2 472 753 B1

**Fig. 7a**

OIF1  OIF2

OD  IC  OD

CIF-OSU

OSU

OD  OD

OIF3  OIF4

**Fig. 7b**

OIF1  OIF2

MZI  IC  MZI

IC  IC

CIF-OSU

OSU

MZI  MZI

OIF3  OIF4

**Fig. 7c**

OIF1  OIF2

CS  IC  CS

IC

VOA  VOA

CIF-OSU

VOA  VOA  IC

OSU

CS  CS

OIF3  OIF4

35

**Fig. 8a**

**Fig. 8b**

Fig. 9

# Fig. 10

**ND1**                              **ND2**

SA1 — configure OSU1 to state CF1        configure OSU2 to state CF1' — SB1

SA2 — start to transmit the sequence of SRTX-A with encoder 1    *SRTX-A, enc1, TL1* → detect sequence with decoder 1 — SB2

                                        *sequence detected*

SA3 — detect sequence of SRTX-B with decoder 1 ← *SRTX-B, enc1, TL2* start to transmit the sequence of SRTX-B with encoder 1 — SB3

         *sequence detected*

SA4 — synchronize SRRX1-A        synchronize SRRX-1B — SB4

         *SRRX1-A synchronized*          *SRRX1-B synchronized*

SA5 — start to operate SRRX1-A at clock-rate        start to operate SRRX1-B at clock-rate — SB5

SA6 — detect sequence of SRTX-B with decoder 2 ← *SRTX-B, enc2, TL2* start to transmit sequence of SRTX-B with encoder 2 — SB6

         *sequence detected*

SA7 — start to transmit sequence of SRTX-A with encoder 2   *SRTX-A, enc2, TL1* → detect sequence of SRTX-A with encoder 2 — SB7

    wait for Δ T                            *sequence detected*

SA8 — start to transmit sequence of SRTX-A with encoder 1   *SRTX-A, enc1, TL1* → detect sequence of SRTX-A with decoder 1 — SB8

                                         *sequence detected*

SA9 — configure OSU1 to state CF2        configure OSU2 to state CF2' — SB9

         •
         •
         •

# Fig. 11

**Fig. 12**

o(k) ←— sequence of LFSR at transmission side

$s_1(j)$

receive first subset $s_1(j)$ over first fiber — ST1

p1 →

determine position p1 of $s_1(j)$ within o(k) — ST3

start first counter $c_1$ at reception of last value of $s_1(j)$ — ST2

increase counter $c_1$ by p1
$c_1 := c_1 + p1$
and keep counter running — ST4

use $c_1$ and $c_2$ for determining delay difference
$\Delta\tau = |c2-c1| \cdot cr$ — ST9

increase counter $c_2$ by p2
$c_2 := c_2 + p2$ and keep counter running — ST8

determine position p2 of $s_2(m)$ within o(k) — ST7

start second counter $c_2$ at reception of last value of $s_2(m)$ — ST6

p2 →

$s_2(m)$

receive second subset $s_2(m)$ over second fiber — ST5

$2^N - 1$

## Fig. 13

n(k) ◄—sequence of a local LFSR used as a counter

o(k) ◄—sequence of LFSR at transmission side

**ST11**

receive first subset $s_1$ (j) over first fiber

**ST21**
at reception of last value of $s_1$ (j)
store the values of $s_1$ (j) and $s_1$'(j) of local LFSR

**ST31**
determine position p1 of $s_1$ (j) within o(k)
determine position p1' of $s_1$ ' (j) within n(k)

use p1-p1'=$\Delta 1$ and p2-p2'=$\Delta 2$
for determining delay difference
$\Delta \tau = |\Delta 2 - \Delta 1| \cdot cr$

**ST71**

**ST61**
determine position p2 of $s_2$ (m) within o(k)
determine position p2' of $s_2$'(j) within n(k)

**ST51**
store the values of $s_2$ (m) and $s_2$'(m) of local LFSR
at reception of last value of $s_2$ (m)

$s_2$(m)

receive second subset $s_2$ (m) over second fiber

**ST41**

$2^N - 1$

EP 2 472 753 B1

# Fig. 14

# Fig. 15

o(k) ◄── sequence of LFSR at transmission side

$s_1(j)$

receive first subset $s_1(j)$ over first fiber

determine position p1 of $s_1(j)$ within o(k)

ST22

ST12

simultaneously received sequences

use $p_1$ and $p_2$ for determining delay difference $\Delta\tau = |p2-p1| \cdot cr$

ST42

determine position p2 of $s_2(m)$ within o(k)

ST32

$s_2(m)$

ST12

receive second subset $s_2(m)$ over second fiber

p1

p2

$2^N-1$

N

N

EP 2 472 753 B1

**Fig. 16**

# Fig. 17

# Fig. 18

TL1 - - -
TL2 -

TS2
TS1
TS1
TS2
OCU

IF111
IF222

ND201

ODD

IP-ODD
OP-ODD

## Fig. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0616444 A2
- WO 9613915 A